(19) Europäisches Patentamt / European Patent Office / Office européen des brevets

(11) **EP 3 301 920 A1**

(12) **EUROPEAN PATENT APPLICATION**

(43) Date of publication:
04.04.2018 Bulletin 2018/14

(51) Int Cl.:
*H04N 19/119* [(2014.01)]    *H04N 19/122* [(2014.01)]
*H04N 19/16* [(2014.01)]    *H04N 19/176* [(2014.01)]
*H04N 19/597* [(2014.01)]

(21) Application number: **16306264.9**

(22) Date of filing: **30.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **URBAN, Fabrice**
**35576 CESSON-SEVIGNE (FR)**
• **VIELLARD, Thierry**
**35576 CESSON-SEVIGNE (FR)**
• **LELEANNEC, Fabrice**
**35576 CESSON-SEVIGNE (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR CODING/DECODING OMNIDIRECTIONAL VIDEO**

(57) A method is proposed for coding an omnidirectional video into a bitstream, at least one picture of the omnidirectional video being represented as a surface, the surface being projected onto at least one 2D picture using a projection function. Such method comprises, for at least one current block of the at least one 2D picture: adapting (S2400) a size of the at least one current block as a function of a pixel density function determined according to the projection function; and encoding (S2410) the at least one current block into the bitstream using the adapted size.

FIG. 20

**Description**

1. Technical field

The present disclosure relates to encoding and decoding immersive videos, for example when such immersive videos are processed in a system for virtual reality, augmented reality or augmented virtuality and for instance when displayed in a head mounted display device. 2. Background

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

3. Summary

A particular aspect of the present disclosure relates to a method for coding an omnidirectional video into a bitstream, at least one picture of the omnidirectional video being represented as a surface, the surface being projected onto at least one 2D picture using a projection function. The method comprises, for at least one current block of the at least one 2D picture:

-    adapting a size of the at least one current block as a function of a pixel density function determined according to the projection function; and

-    encoding the at least one current block into the bitstream using the adapted size.

Thus, this particular embodiment relies on a wholly novel and inventive solution for encoding an omnidirectional video into a bitstream.

For this, it is proposed to take into account the deterministic distortion resulting from the projection function of the surface on the 2D picture, such distortion resulting in a given pixel density function across the 2D picture. Consequently, a size associated to a block to be encoded can be adapted due to this a priori known information content of the block so that the encoding processing is initiated in a situation that is closer to the optimum, thus resulting in a more efficient encoding processing.

For instance, such a size associated to a block may be a column and/or row size of the block, and/or a size of a support used for encoding this block.

According to one embodiment, the act of adapting a size of the at least one current block comprises splitting the at least one current block according to a criterion function of the pixel density function, the act of splitting delivering at least one subblock associated to the at least one current block; and the act of encoding comprises encoding the at least one subblock associated to the at least one current block.

In this embodiment, the amount of operations performed for applying the splitting process of the considered standard (e.g. the rate distortion optimization process in HEVC) is reduced as splitting decisions have already been taken according to a priori known information derived from the pixel density function.

According to one embodiment, the act of adapting a size of the at least one current block comprises adapting a size of a transform to be applied to the current block or subblock; and the act of encoding comprises applying the transform of adapted size to the current block or subblock.

In this embodiment, the complexity of the transform processing module is reduced, thus resulting in an encoder optimization.

In one embodiment of the present disclosure, it is proposed a method for decoding a bitstream representative of an omnidirectional video, at least one picture of the omnidirectional video being represented as a surface, the surface being projected onto at least one 2D picture using a projection function. The method comprises, for at least one current block of the at least one 2D picture:

-    adapting a size of the at least one current block as a function of a pixel density function determined according to the projection function; and

-    decoding from the bitstream the at least one current block using the adapted size.

Thus, the characteristics and advantages of the method for decoding according to the present disclosure are the same as the method for coding described above. Therefore, they are not described in more detail.

According to one embodiment, the act of adapting a size of the at least one current block comprises splitting the at least one current block according to a criterion function of the pixel density function, the act of splitting delivering at least one subblock associated to the at least one current block; and the act of decoding comprises decoding the at least one subblock associated to the at least one current block.

In this embodiment, the bitrate of the bitstream is thus minimized, as no particular splitting syntax is needed.

According to one embodiment, the act of adapting a size of the at least one current block comprises adapting a size of an inverse transform to be applied to the current block or subblock; and the act of encoding comprises applying the inverse transform of adapted size to the current block or subblock.

In this embodiment, the complexity of the inverse transform processing module is reduced, thus resulting in a decoder optimization.

According to one embodiment, the criterion used for deciding the splitting of the at least one current block belongs to a group comprising at least:

- a ratio of an average value of a horizontal, respectively vertical, component of the pixel density function over an average value of the vertical, respectively horizontal, component of the pixel density function being compared to a threshold;

- a ratio of a maximum value of the horizontal, respectively vertical, component of the pixel density function over a maximum value of the vertical, respectively horizontal, component of the pixel density function being compared to a threshold; or

- a ratio of a maximum value of the horizontal, respectively vertical, component of the pixel density function over a minimum value of the vertical, respectively horizontal, component of the pixel density function being compared to a threshold.

According to one embodiment, the act of adapting a size of the at least one current block comprises delivering at least one current block of adapted size, and wherein the adapted size is derived from a nominal size divided by an average value, or a median value, of the pixel density function computed for at least one pixel of the at least one current block.

In this embodiment, the size of square blocks (e.g. CTU, CU, PU, TU) can be adapted so as to optimize the encoding/decoding processing taking into account for the distortion resulting from the projection of the 3D surface on the 2D picture. This embodiment is in particular suited for equirectangular projections in which the resulting pixel density function depends only in the vertical coordinate (i.e. Y) in the resulting 2D picture.

According to one embodiment, the act of adapting a size comprises:

- determining a width, respectively a height, of the at least one current block as a function of an average value, or a median value, of a horizontal, respectively vertical, component of the pixel density function computed for at least one pixel of the at least one current block.

In this embodiment, this is the size of rectangular blocks (e.g. CTU, CU, PU, TU) that can be adapted so as to optimize the encoding/decoding processing taking into account for the distortion resulting from the projection of the 3D surface on the 2D picture. This embodiment is in particular suited for cube mapping projections in which the resulting pixel density function depends on both coordinate (i.e. X and Y) in the resulting 2D picture.

According to one embodiment, the splitting into at least one subblock of the at least one current block is signaled in the bitstream using an existing splitting syntax of the standard.

In this embodiment, the decoder of the existing standard is reused as such, thus allowing minimizing the cost for deploying the disclosed method in applications.

Another aspect of the present disclosure relates to an apparatus for coding an omnidirectional video into a bitstream, at least one picture of the omnidirectional video being represented as a surface, the surface being projected onto at least one 2D picture using a projection function. The apparatus for coding comprises, for at least one current block of the at least one 2D picture:

- means for adapting a size of the at least one current block as a function of a pixel density function determined according to the projection function; and

- means for encoding the at least one current block into the bitstream using the adapted size.

Such an apparatus is particularly adapted for implementing the method for coding a large omnidirectional video into a bitstream according to the present disclosure (according to any of the various aforementioned embodiments).

Thus, the characteristics and advantages of this apparatus are the same as the method for coding described above. Therefore, they are not described in more detail.

Another aspect of the present disclosure relates to an apparatus for decoding a bitstream representative of an omnidirectional video, at least one picture of the omnidirectional video being represented as a surface, the surface being projected onto at least one 2D picture using a projection function. The apparatus for decoding comprises, for at least one current block of the at least one 2D picture:

- means for adapting a size of the at least one current block as a function of a pixel density function determined according to the projection function; and

- means for decoding from the bitstream the at least one current block using the adapted size.

Such an apparatus is particularly adapted for implementing the method for decoding a bitstream representative of an omnidirectional video according to the present disclosure (according to any of the various aforementioned embodiments).

Thus, the characteristics and advantages of this apparatus are the same as the method for coding described above. Therefore, they are not described in more detail.

Another aspect of the present disclosure relates to a computer program product comprising program code instructions for implementing the above-mentioned methods (in any of their different embodiments), when the program is executed on a computer or a processor.

Another aspect of the present disclosure relates to a non-transitory computer-readable carrier medium storing a computer program product which, when executed by a computer or a processor causes the computer or the processor to carry out the above-mentioned methods (in any of their different embodiments).

Another aspect of the present disclosure relates to a bitstream representative of a coded omnidirectional video, at least one picture of the omnidirectional video being represented as a surface, the surface being projected onto at least one 2D picture using a projection function. The bistream comprises:

- coded data representative of at least one current block of the 2D picture; and

- an information indicating that the at least one current block has been encoded using a size adapted as a function of a pixel density function determined according to the projection function.

Such bitstream is delivered by a device implementing the method for coding an omnidirectional video into a bitstream according to the present disclosure, and intended to be used by a device implementing the method for decoding a bitstream representative of an omnidirectional video according to the present disclosure (according to any of their various aforementioned embodiments).

Thus, the characteristics and advantages of this bitstream are the same as the methods described above. Therefore, they are not described in more detail.

Another aspect of the present disclosure relates to an immersive rendering device comprising an apparatus for decoding a bitstream representative of an omnidirectional video according to the present disclosure.

Yet another aspect of the present disclosure relates to a system for immersive rendering of an omnidirectional video encoded into a bistream, comprising at least:

- a network interface for receiving the bistream from a data network,

- an apparatus for decoding the bitstream according to the present disclosure,

- an immersive rendering device.

4. Brief description of the drawings

Figure 1 represents a functional overview of an encoding and decoding system according to a preferred environment of the embodiments of the disclosure,
Figure 2 represents a first embodiment of a system according to the present disclosure,
Figure 3 represents a first embodiment of a system according to the present disclosure,

Figure 4 represents a first embodiment of a system according to the present disclosure,

Figure 5 represents a first embodiment of a system according to the present disclosure,

Figure 6 represents a first embodiment of a system according to the present disclosure,

Figure 7 represents a first embodiment of a system according to the present disclosure,

Figure 8 represents a first embodiment of a system according to the present disclosure,

Figure 9 represents a first embodiment of a system according to the present disclosure,

Figure 10 represents a first embodiment of an immersive video rendering device according to the present disclosure,

Figure 11 represents a first embodiment of an immersive video rendering device according to the present disclosure,

Figure 12 represents a first embodiment of an immersive video rendering device according to the present disclosure,

Figure 13A illustrates an example of projection from a spherical surface S onto a rectangular picture I,

Figure 13B illustrates an XY-plane reference system of a picture I,

Figure 13C illustrates an angular reference system on the sphere S,

Figure 14A illustrates an example of projection from a cubic surface S onto 6 pictures,

Figure 14B illustrates a cube reference system

Figure 14C illustrates an XY-plane reference system of a 2D picture I,

Figure 14D illustrates a layout of the 6 faces of a cube projected on a 2D picture,

Figure 14E, 14F illustrates corresponding re-arranged rectangular pictures according to different layouts,

Figures 15A and 15B illustrate a horizontal pixel density function resulting of the projection from a spherical 3D surface S onto a rectangular 2D picture I according to the embodiment of figure 13A,

Figures 16A and 16B illustrate the vertical and horizontal pixel densities resulting from a projection from a cubic 3D surface S onto 6 2D pictures according to the embodiment of figure 14D,

Figure 17 illustrates an adaptation of CTU size in case of equirectangular mapping according to an embodiment of the present disclosure,

Figure 18 illustrates an adaptation of CTU size in case of cubic mapping according to an embodiment of the present disclosure,

Figure 19 illustrates an adaptation of CTU size in case of equirectangular mapping according to another embodiment of the present disclosure,

Figure 20 illustrates an adaptation of CTU size in case of cubic mapping according to another embodiment of the present disclosure,

Figures 21 illustrates a split of a subblock according to an embodiment of the present disclosure,

Figures 22 illustrates a transformed block according to an embodiment of the present disclosure,

Figures 23 illustrates a transformed block according to another embodiment of the present disclosure,

Figure 24A illustrates block diagrams for an exemplary method for encoding an omnidirectional video into a bistream according to an embodiment of the present disclosure,

Figure 24B illustrates block diagrams for an exemplary method for encoding an omnidirectional video into a bistream according to another embodiment of the present disclosure,

Figure 25A illustrates block diagrams for an exemplary method for decoding a bistream representative of an omnidirectional video according to an embodiment of the present disclosure,

Figure 25B illustrates block diagrams for an exemplary method for decoding a bistream representative of an omnidirectional video according to another embodiment of the present disclosure,

Figure 26 illustrates block diagrams for an exemplary video encoder implementing a method for encoding an omnidirectional video into a bistream according to any of the embodiments disclosed in relation with figures 24A and 24B,

Figure 27 illustrates block diagrams for an exemplary decoder implementing a method for decoding a bistream representative of an omnidirectional video according to any of the embodiments disclosed in relation with figures 25A and 25B,

Figure 28 illustrates an exemplary apparatus for encoding an omnidirectional video into a bistream according to one embodiment,

Figure 29 illustrates an exemplary apparatus for decoding a bistream representative of an omnidirectional video according to one embodiment.

## 5. Description of embodiments

A large field-of-view content may be, among others, a three-dimension computer graphic imagery scene (3D CGI scene), a point cloud or an immersive video.

Many terms might be used to design such immersive videos such as for example virtual Reality (VR), 360, panoramic, $4\pi$, steradians, immersive, omnidirectional, large field of view.

An immersive video typically refers to a video encoded on a rectangular frame that is a two-dimension array of pixels (i.e. element of color information) like a "regular" video. In many implementations, the following processes may be performed. To be rendered, the frame is, first, mapped on the inner face of a convex volume, also called mapping surface (e.g. a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. There is a lack of taking specificities of immersive videos into account in encoding and decoding methods. Indeed, as immersive videos are 360° videos, a panning, for example, introduces motion and discontinuities that require a large amount of data to be encoded while the content of the scene does not change. Taking immersive videos specificities into account while encoding and decoding video frames would bring valuable advantages to the state-of-art methods.

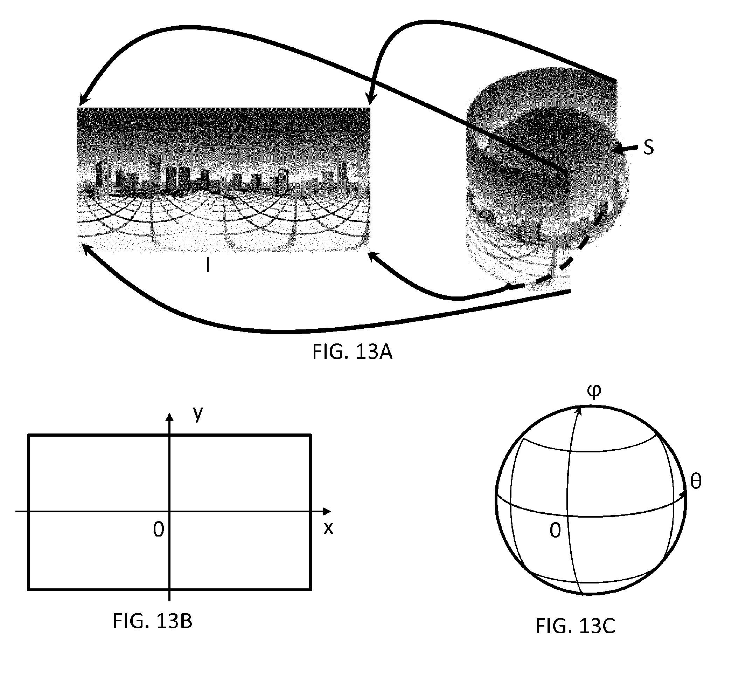

Figure 13A shows an example of projection from a surface S represented as a sphere onto one single rectangular picture I using an equi-rectangular projection.

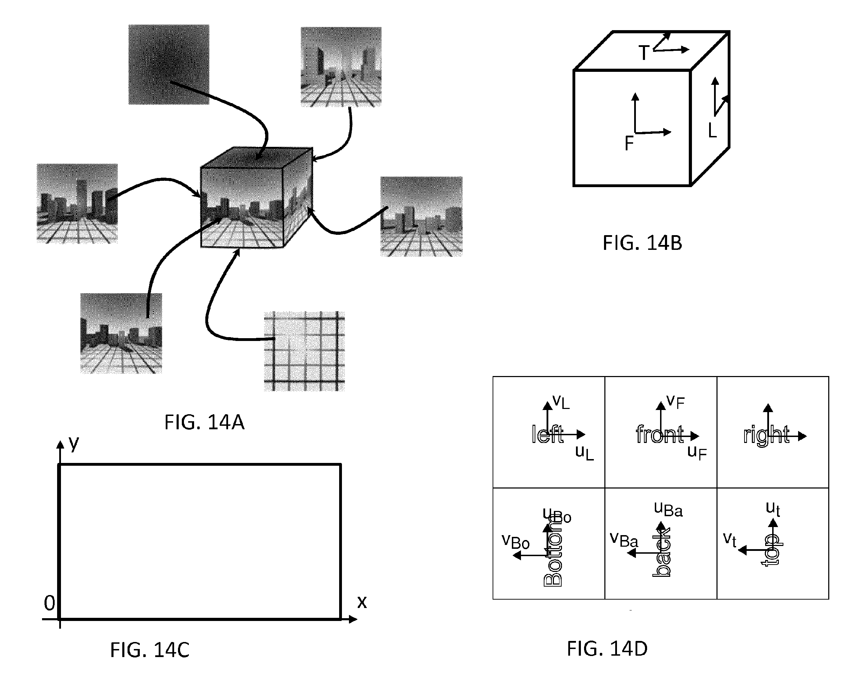

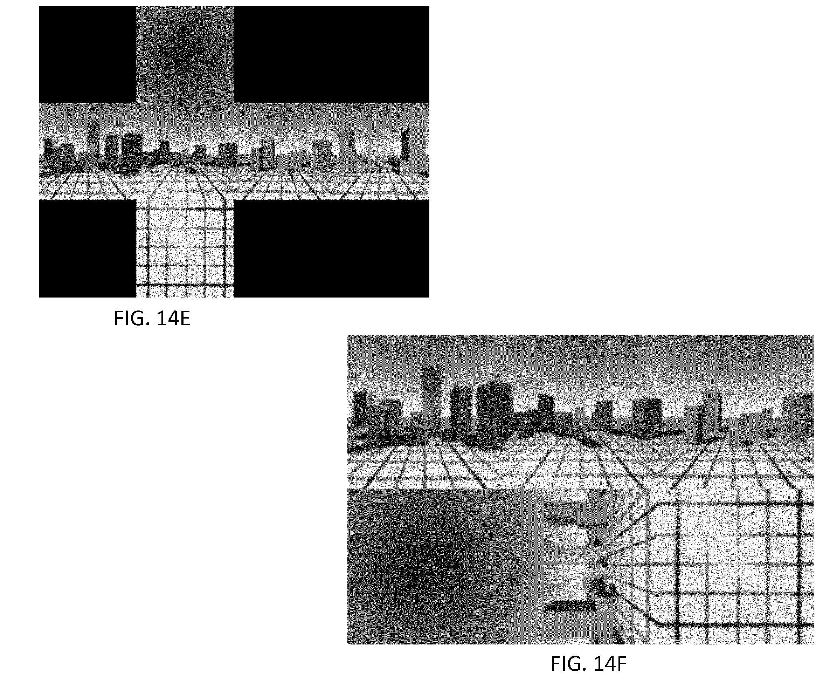

Figure 14A shows another example of projection from the surface S, here represented as a cube, onto six pictures or faces. The faces of the cube which reference system is illustrated on figure 14B can possibly be re-arranged into one single picture as shown in figures 14E or 14F.

For coding an omnidirectional video, the projected picture of the 3D surface can then be coded using conventional video coding standards such as HEVC, H.264/AVC, etc... According to such standards, a 2D picture is encoded by first dividing it into non-overlapping blocks of fixed size and then by encoding those blocks individually.

However, it appears that such conventional 2D video coder/decoder remains suboptimal for coding a picture of a 3D surface projected on a 2D picture, such projected picture presenting caracteristics different from the ones associated to classical 2D pictures.

In all of the figures of the present document, the same numerical reference signs designate similar elements and steps.

The present principle is disclosed here in the case of omnidirectional video, it may also be applied in case of conventional plane images acquired with very large field of view, i.e. acquired with very small focal length like fish eye lens.

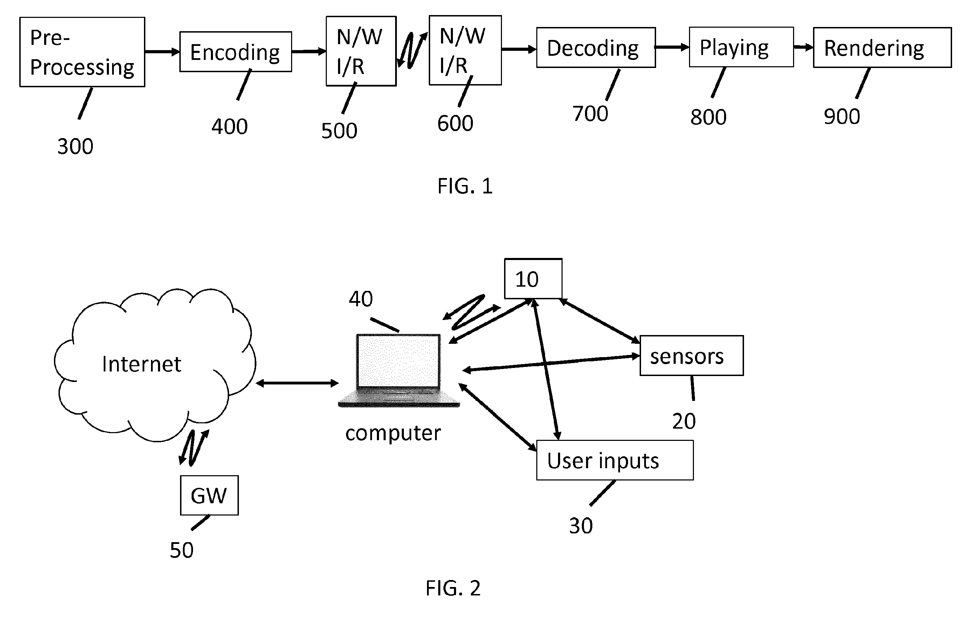

Figure 1 illustrates a general overview of an encoding and decoding system according to an example embodiment. The system of figure 1 is a functional system. A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 300 may also accept an omnidirectional video in a particular format (for example, equirectangular) as input, and pre-processes the video to change the mapping into a format more suitable for encoding. Depending on the acquired video data representation, the pre-processing module 300 may perform a mapping space change. The encoding device 400 and the encoding method will be described with respect to other figures of the specification. After being encoded, the data, which may encode immersive video data or 3D CGI encoded data for instance, are sent to a network interface 500, which can be typically implemented in any network interface, for instance present in a gateway. The data are then transmitted through a communication network, such as internet but any other network can be foreseen. Then the data are received via network interface 600. Network interface 600 can be implemented in a gateway, in a television, in a set-top box, in a head mounted display device, in an immersive (projective) wall or in any immersive video rendering device. After reception, the data are sent to a decoding device 700. Decoding function is one of the processing functions described in the following figures 2 to 12. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In a variant, the player 800 is integrated in the rendering device 900.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system comprises processing functions, an immersive video rendering device which may be a head-mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 2 to 6, several embodiments are described of this first type of system for displaying augmented reality, virtual reality, augmented virtuality or any content from augmented reality to virtual reality.

Figure 2 illustrates a particular embodiment of a system configured to decode, process and render immersive videos. The system comprises an immersive video rendering device 10, sensors 20, user inputs devices 30, a computer 40 and a gateway 50 (optional).

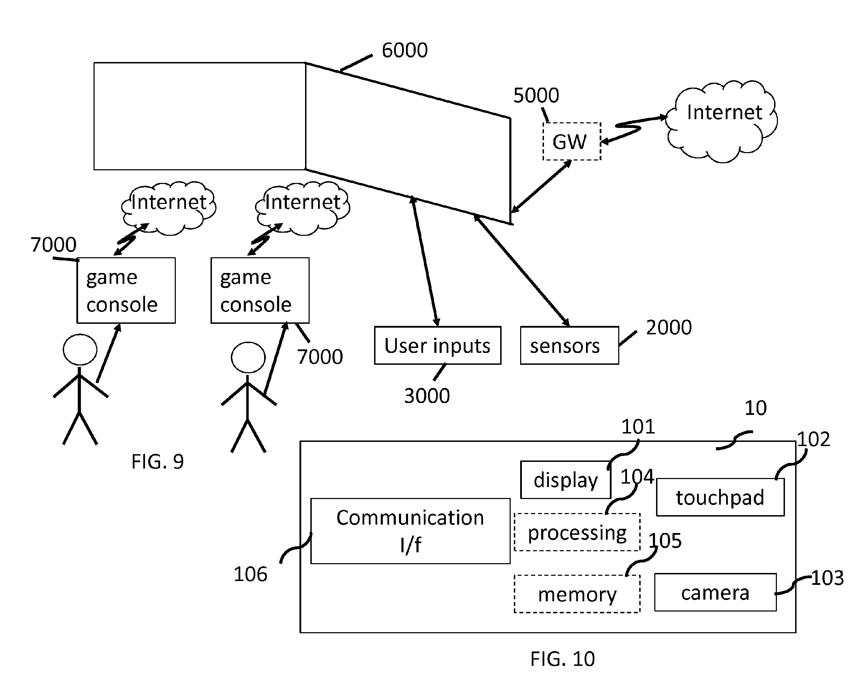

The immersive video rendering device 10, illustrated on Figure 10, comprises a display 101. The display is, for example of OLED or LCD type. The immersive video rendering device 10 is, for instance a HMD, a tablet or a smartphone. The device 10 may comprise a touch surface 102 (e.g. a touchpad or a tactile screen), a camera 103, a memory 105 in connection with at least one processor 104 and at least one communication interface 106. The at least one processor 104 processes the signals received from the sensors 20. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The Communication interface 106 of the processing device is wireline interfaces (for example a bus interface, a wide area network interface, a local area network interface) or wireless interfaces (such as a IEEE 802.11 interface or a Bluetooth® interface). Computer 40 sends data and optionally control commands to the immersive video rendering device 10. The computer 40 is in charge of processing the data, i.e. prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g. decodes them and possibly prepares the part of the video content that is going to be displayed by the immersive video rendering device 10) and sends the processed data to the immersive video rendering device 10 for display. In a variant, the system may also comprise local storage (not represented) where the data representative of an immersive video are stored, said local storage can be on the computer 40 or on a local server accessible through a local area network for instance (not represented).

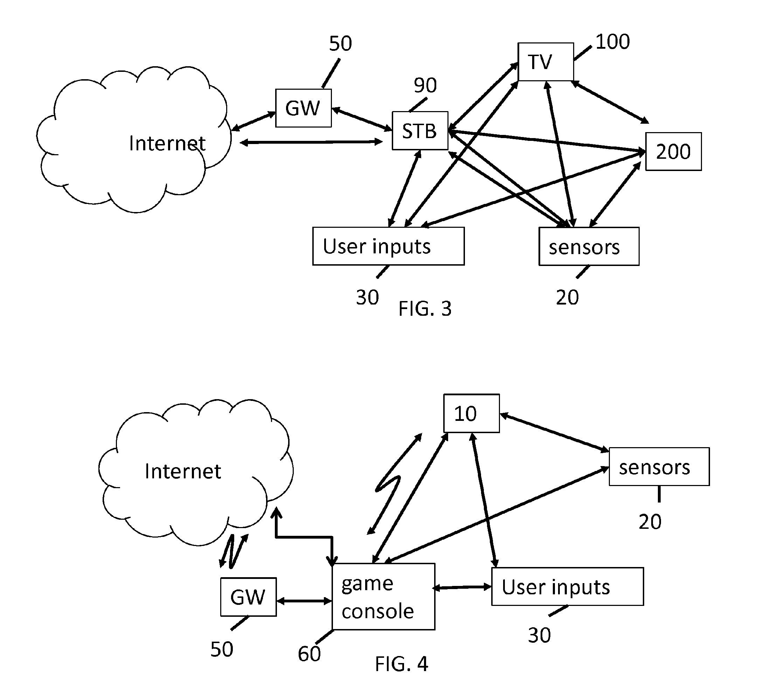

Figure 3 represents a second embodiment. In this embodiment, a STB 90 is connected to a network such as internet directly (i.e. the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to Figure 2. The STB 90 obtains the data representative of the immersive video from the internet. In a variant, the STB 90 obtains the data representative of the immersive video from a local storage (not represented) where the data representative of the immersive video are stored.

Figure 4 represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In a variant, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

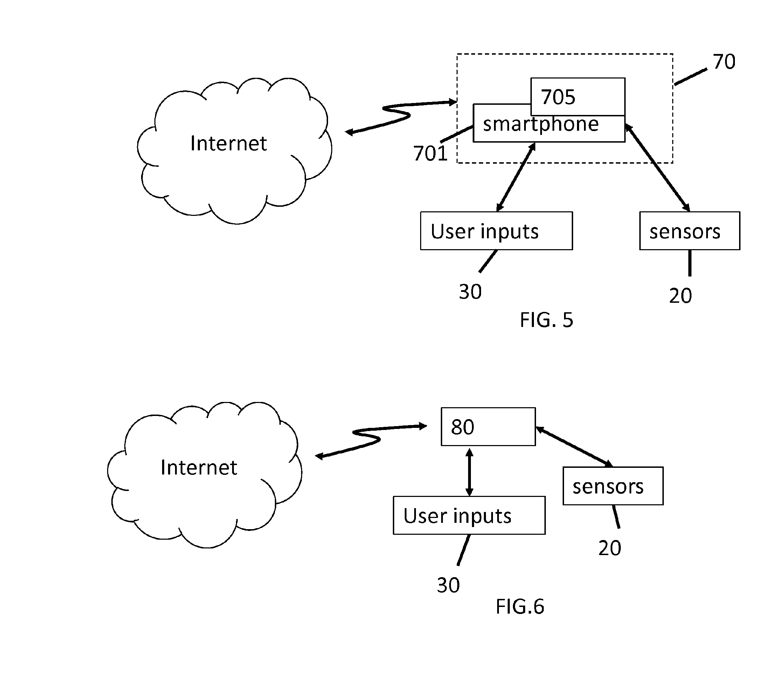

Figure 5 represents a fourth embodiment of said first type of system where the immersive video rendering device 70 is formed by a smartphone 701 inserted in a housing 705. The smartphone 701 may be connected to internet and thus may obtain data representative of an immersive video from the internet. In a variant, the smartphone 701 obtains data representative of an immersive video from a local storage (not represented) where the data representative of an immersive video are stored, said local storage can be on the smartphone 701 or on a local server accessible through a local area network for instance (not represented).

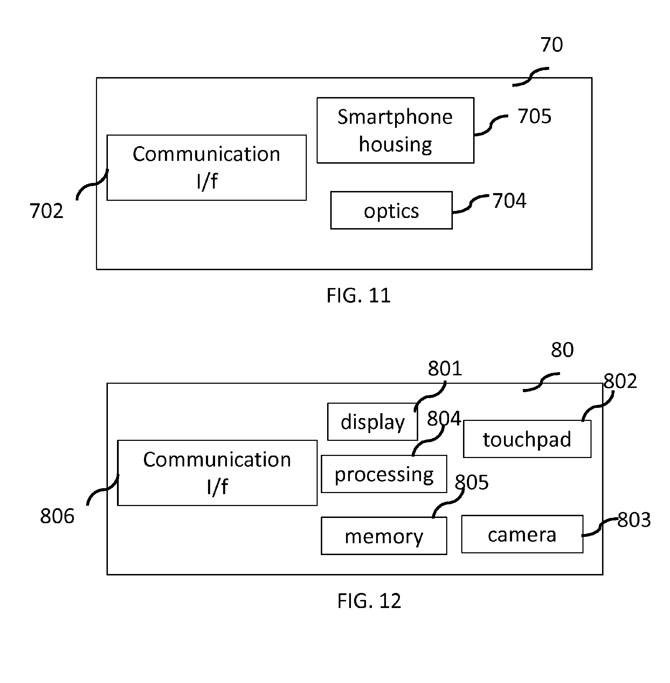

Immersive video rendering device 70 is described with reference to Figure 11 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore no display other than the one of the smartphone 701 is included. However, optics 704, such as lenses, are included for seeing the data on the smartphone display. The smartphone 701 is configured to process (e.g. decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 6 represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In a variant, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated on Figure 12. The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

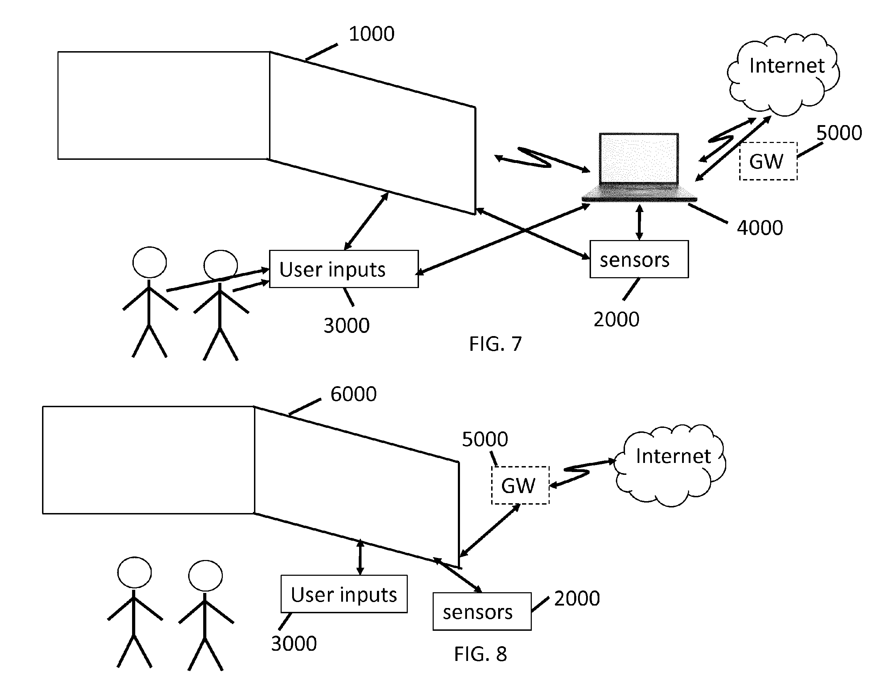

A second system, for processing augmented reality, virtual reality, or augmented virtuality content is illustrated in figures 7 to 9. Such a system comprises an immersive wall.

Figure 7 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In a variant, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g. position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e. preparing them for display, to be displayed by the immersive wall 1000. Processing can be done exclusively by the computer 4000 or part of the processing can be done by the computer 4000 and part by the immersive wall 1000.

Figure 8 represents another system of the second type. It comprises an immersive (projective) wall 6000 which is configured to process (e.g. decode and prepare data for display) and display the video content. It further comprises sensors 2000, user input devices 3000.

The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g. position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

Figure 9 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

The general principle of the disclosed method consists in coding an omnidirectional video into a bitstream taking into account for the distortion of the information resulting of the projection operation of a 3D surface on a 2D picture. More particularly, it is proposed to adapt the size of the blocks constituting the 2D picture as a function of the pixel density function determined according to the projection function of the 3D surface on the 2D picture. The blocks of adapted size are then encoded into the bitstream. Indeed, the inventors have noted that the projection operation of the 3D surface on the 2D picture lead to deterministic distortions on the resulting picture.

For instance, reconsidering the embodiment shown on Figure 13A in which the projection is from a surface S represented as a sphere onto one single rectangular picture I using an equirectangular projection, the following relationship between the Cartesian co-ordinates on the XY-plane as illustrated on figure 13B, and the angular co-ordinates on the sphere as illustrated on figure 13C holds:

$$x = W\theta/2\pi + W/2,$$

$$y = 2H\varphi/2\pi + H/2,$$

With W and H being the width and the height of the 2D picture (i.e. the frame to be encoded at the end), and where (x,y) corresponds to the location of a point M on the XY-plane of the 2D picture and $(\theta, \varphi)$ being the coordinate of a corresponding point M' on the sphere S. However, it can be seen that the width of each pixel projected in the rendering frame varies according to the angle $\varphi$. The variation of the width of the pixel can be very high: in equirectangular mapping, the whole top line and bottom line of the 2D picture correspond to one single pixel (that lays at the poles of the sphere S).

Consequently, a density of pixel in the 2D picture can be defined in order to quantize this spreading effect of the original pixels on the sphere S when projected onto the 2D picture.

According to one embodiment of the present disclosure, the density of pixels at a given location (x,y) on the 2D picture is defined as inversely proportionnal to the number of pixels of the 2D picture (assuming a uniform pixel grid) that are filed by a given pixel of the sphere S that is projected onto that particular location (x,y).

However, due to the structure of the projection operation, it appears that the density of pixels in the 2D picture is not isotropic. Therefore, According to one embodiment of the present disclosure, the pixel density function is defined as a 2D density function $Density_{2D}(x,y)$ represented as a vector composed of both horizontal and vertical pixel density functions ($Density_{2D_h}(x, y)$ and $Density_{2D_v}(x,y)$ respectively). In that case, for a given pixel located in (x,y) (i.e. a given location (x,y)) in the 2D picture pixel grid, the horizontal pixel density function is defined as the width (i.e. the size along the horizontal axis X) of one pixel in the 2D picture pixel grid divided by the width of all the pixels in the same row of the 2D picture pixel grid that are effectively filed with the original pixel on the sphere S projected onto that particular pixel located in (x,y) in the 2D picture pixel grid. The same holds for the vertical pixel density function when considering the height (i.e. the size along the vertical axis y) of one pixel in the 2D picture pixel grid divided by the height of all the pixels in the same column of the 2D picture pixel grid that are effectively filed with the original pixel on the sphere S projected onto that particular pixel located in (x,y) in the 2D picture pixel grid.

In case of an equirectangular projection of the sphere S onto a 2D picture, the horizontal and vertical densities of pixels corresponding to that definition can be expressed as:

$$\left(\frac{\cos(\varphi)\,\rho\pi}{W}, \frac{\rho\pi}{2H}\right)$$

with $\rho$ the diameter of the sphere S. However, for the sake of simplicity, the parameters can be chosen so that the maximum horizontal and vertical density functions are set to one. It results in normalized horizontal and vertical densities of pixels that can be expressed as:

$$(\cos(\varphi), 1)$$

Equivalently, using the coordinate change given above between the Cartesian co-ordinates on the XY-plane, and the angular co-ordinates on the sphere, it results in:

$$Density_{2D}(x,y) = \left(Density_{2D_h}(x,y), Density_{2D_v}(x,y)\right) = \left(\cos\left(\left(\frac{y}{H} - \frac{1}{2}\right)\cdot\pi\right), 1\right) \quad \text{(Eq-1)}$$

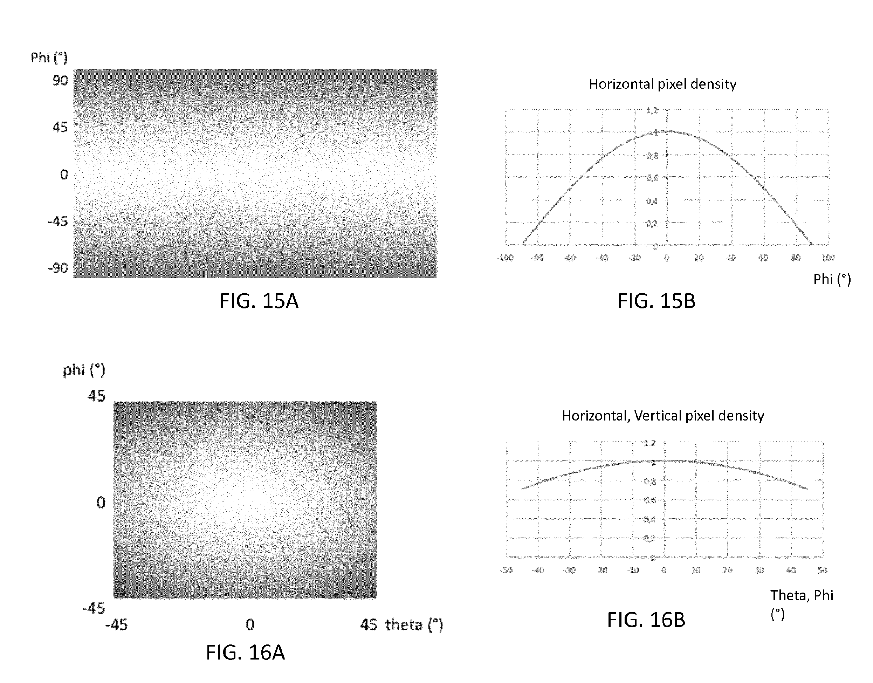

We thus see in that particular embodiment that the vertical pixel density on the 2D picture is constant (i.e. no spreading of the original pixels occurs in the vertical direction, i.e. along the Y axis when performing the projection) whereas the horizontal pixel density varies according to the cosine of the y coordinate as shown in figure 15A (the grey intensity is inversely proportional to the pixel horizontal density), and in figure 15B (for a cut in the 2D surface for a constant X).

As another example, we can reconsider the embodiment shown on Figure 14A in which the projection is performed from a surface S represented as a cube onto six pictures (or faces) re-arranged into one single picture (e.g. according to the embodiments shown in figures 14D, 14E or 14F). More particularly, in case the considered layout corresponds to the one shown in figure 14D, the following relationships holds between the Cartesian coordinates of a point in the XY-plane of the 2D picture of figure 14C and on the cube:

$$f\begin{cases} Left: x < w, y > h: u = \dfrac{2x}{w} - 1, v = \dfrac{2(y-h)}{h} - 1, k = 0 \\[2mm] front: w < x < 2w, y > h: u = \dfrac{2(x-w)}{w} - 1, v = \dfrac{2(y-h)}{h} - 1, k = 1 \\[2mm] right: 2w < x, y > h: u = \dfrac{2(x-2w)}{w} - 1, v = \dfrac{2(y-h)}{h} - 1, k = 2 \\[2mm] bottom: x < w, y < h: u = \dfrac{2y}{h} - 1, v = \dfrac{2(w-x)}{w} - 1, k = 3 \\[2mm] back: w < x < 2w, y < h: u = \dfrac{2y}{h} - 1, v = \dfrac{2(2w-x)}{w} - 1, k = 4 \\[2mm] top: 2w < x, y < h: u = \dfrac{2y}{h} - 1, v = \dfrac{2(3w-x)}{w} - 1, k = 5 \end{cases}$$

Here, $k$ denotes the face number and $(u, v)$, where $u, v \in [-1,1]$, denote the coordinates on that face. Each face of the cube is of width w and of height h.

In that case, figures 16A and 16B show an exemplary vertical, respectively horizontal, pixel density function for one face of the cube, in case of a uniform pixel grid distribution on it (i.e. a uniform pixel width and height along each of the faces of the cube), that can be associated to the 2D picture according to one embodiment of the present disclosure.

Consequently, it can be seen from those two exemplary embodiments that on the contrary of a classical 2D picture in which the information depends only on the object of the picture itself, a projected picture of a 3D surface may present deterministic distortions resulting from the projection operation. Such difference is obviously not taken into account in conventional 2D video coder/decoder. The inventors therefore propose to adapt the size of a block BLK of an existing video codec (e.g. HEVC, H.264/AVC, JVET, VP10, QTBT, etc.) according to a pixel density function determined according to the projection function used for projecting the 3D surface onto the 2D picture. Depending on the video coding standard considered, such block BLK may be identified as the macroblocks (MB) (such as in H.264/AVC) or the Coding Tree Units (CTU) (such as in HEVC), i.e. the units of pixels delivered by the subdividing module. It can further be identified to other subblocks encountered in those standards. For instance, according to an HEVC coder, a coding tree unit comprises a coding tree block (CTB) of luminance samples and two coding tree blocks of chrominance samples and corresponding syntax elements regarding further subdividing of coding tree blocks. A coding tree block of luminance samples may have a size of 16x16 pixels, 32x32 pixels or 64x64 pixels. Each coding tree block can be further subdivided into smaller blocks (known as coding blocks CB) using a tree structure and quadtree-like signaling. The root of the quadtree is associated with the coding tree unit. The size of the luminance coding tree block is the largest supported size for a luminance coding block. One luminance coding block and ordinarily two chrominance coding blocks form a coding unit (CU). A coding tree unit may contain one coding unit or may be split to form multiple coding units, and each coding unit having an associated partitioning into prediction units (PU) and a tree of transform unit (TU). The decision whether to code a picture area using interpicture or intra picture prediction is made at the coding unit level. A prediction unit partitionning structure has its root at the coding unit level. Depending on the basic prediction-type decision, the luminance and chrominance coding blocks can then be further split in size and predicted from luminance and chrominance prediction blocks (PB). The HEVC standard supports variable prediction block sizes from 64x64 down to 4x4 samples. The prediction residual is coded using block transforms. A transform unit (TU) tree structure has its root at the coding unit level. The luminance coding block residual may be identical to the luminance transform block or may be further split into smaller luminance transform blocks. The same applies to chrominance transform blocks. A transform block may have size of 4x4, 8x8, 16x16 or 32x32 samples. In such embodiment, it is therefore proposed to adapt the size of a CU, PU or TU according to the density function as for a CTU or a macroblock.

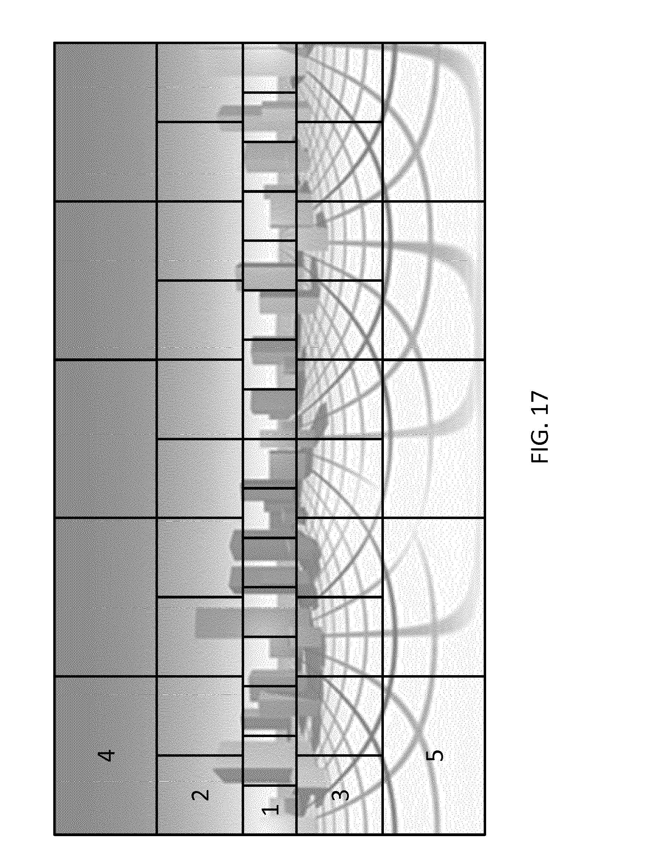

Referring now to figure 17, we detail an adaptation of the size of the CTU blocks in case of equirectangular mapping according to an embodiment of the present disclosure. However, as discussed above, the embodiment disclosed herein could apply equivalently to adapt the size of a CU, PU or TU.

Because the number of CTU in the 2D image and their size depend on the size of the image, it is proposed as a first step to map a CTU grid to the image, before processing the CTU in raster-scan order. This can be done only once at the first image and doesn't need any additional signal to be transmitted because it is based on the layout and size of the video and CTU nominal size.

More particularly, in one embodiment, the first CTU 1 is placed where the pixel density is maximum (for achieving a minimal distortion). For example, the first CTU 1 is placed at the center left of the image for the equirectangular layout, or the center of the front face for the cube mapping. It is to be noted that the top left pixel of the first CTU can be chosen to be aligned horizontally and/or vertically on the horizontal and/or vertical center of the image/face; or on a position multiple of p, p being the size of the smallest possible transform, or a power of 2 for hardware design simplification.

Once placed, the size of the first CTU 1 is adapted according to the pixel density. According to different variants, the adapted size is obtained as:

- a nominal size divided by an average value of a pixel density function computed over the block;
- a nominal size divided by the median value of a pixel density function computed over the block;
- a nominal size divided by the value of a pixel density function taken at the pixel located at the center of the block.

In case the pixel density function is a 2D pixel density function composed of both a horizontal and a vertical density function as discussed above in relation with figures 15A to 16B, the average value may be taken as the average value of the averages of the horizontal and vertical density functions computed over the block. In the same way, the median value may be taken as the median value of the median values of the horizontal and vertical density functions computed over the block. In variants, the skilled person would easily be able to use other statistics based on the horizontal and vertical density functions depending on its use case.

The process is then repeated, for instance in a raster-scan order in order to place and adapt the size of the other CTUs.

Reconsidering the embodiment where the projection function corresponds to an equirectangular mapping (as discussed above in relation with the figure 13A), the 2D density function is given by (Eq-1). It appears that this function, composed of both the horizontal and the vertical density functions, is independent of the x coordinate, thus explaining that the adapted size of the CTU along a given 2D image line remains the same. For example, as illustrated on figure 17, five different adapted sizes are used (CTU 1 to 5).

In one variant, the CTU adapted size is rounded to the closest power of two in order to have good split properties for the subblocks whose maximum size is derived from the CTU size (or to the closest multiple of the minimum transform size depending on the split strategy and the codec abilities).

Either the minimum block size, or the maximum split depth is set to remain constant. In the latter, it means that for bigger CTU, the minimum transform size is bigger, which is coherent with reduced pixel density. Thus, signaling can be reduced, as small transforms have little advantage for low pixel density.

The value of the adapted size of the CTUs may be signaled in the bistream to the decoder using a syntax element, e.g. an existing syntax element of the standard. For example, in case of an HEVC standard, the adapted size of the CTUs may be signaled in a Sequence Parameter Set (SPS) of the bistream or in a Picture Parameter SET (PPS), or in a particular syntax element for the CU, PU or TU. According to another variant of this embodiment, no signaling is used and it is assumed that the decoder will perform the same derivations for determining the adapted size of the CTUs according to the density function.

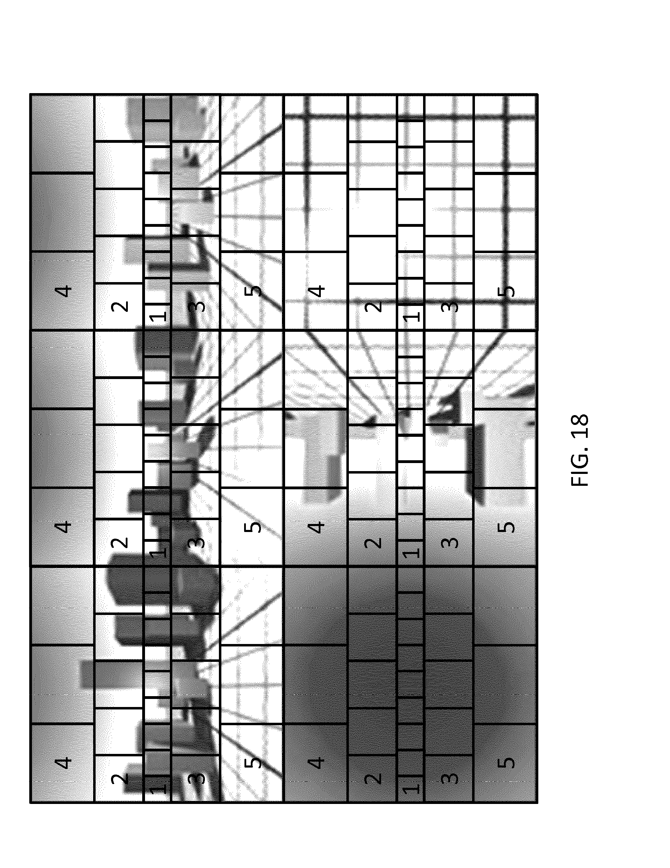

Referring now to figure 18, we detail an adaptation of the size of the CTU blocks in case of cubic mapping according to an embodiment of the present disclosure. However, in that case again the embodiment disclosed herein could apply equivalently to adapt the size of a CU, PU or TU.

The same concepts as disclosed above in relation with figure 17 apply in the present case. However, having the six faces of the cube re-arranged into one single 2D picture (according to the embodiment disclosed in relation with figure 14F in the present embodiment), the CTU may be trimmed outside the image, and the CTU boundaries may be set to coincide with surface faces.

In a variant, the size can be set constant on a CTU row (or column), for allowing the mapping of the CTU on the 2D image.

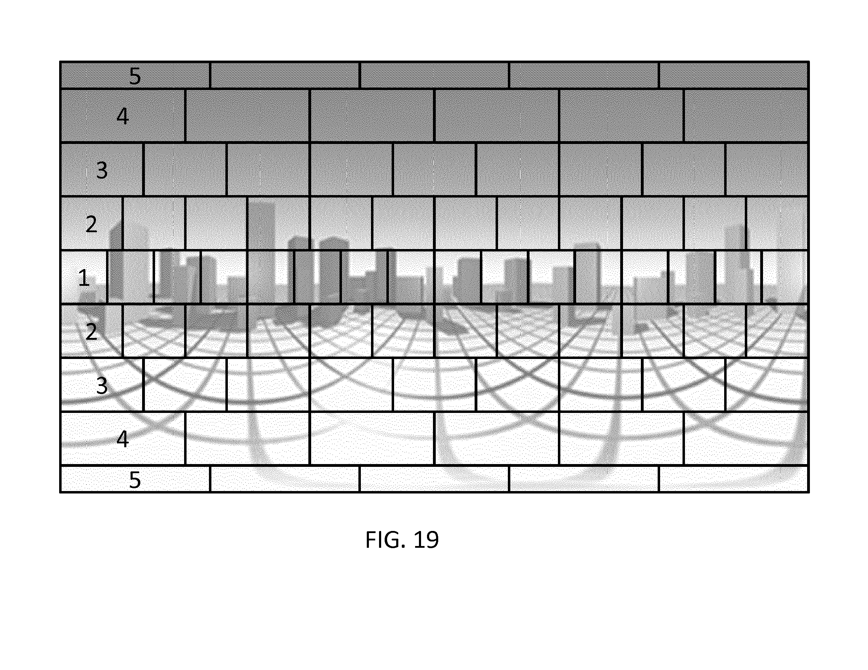

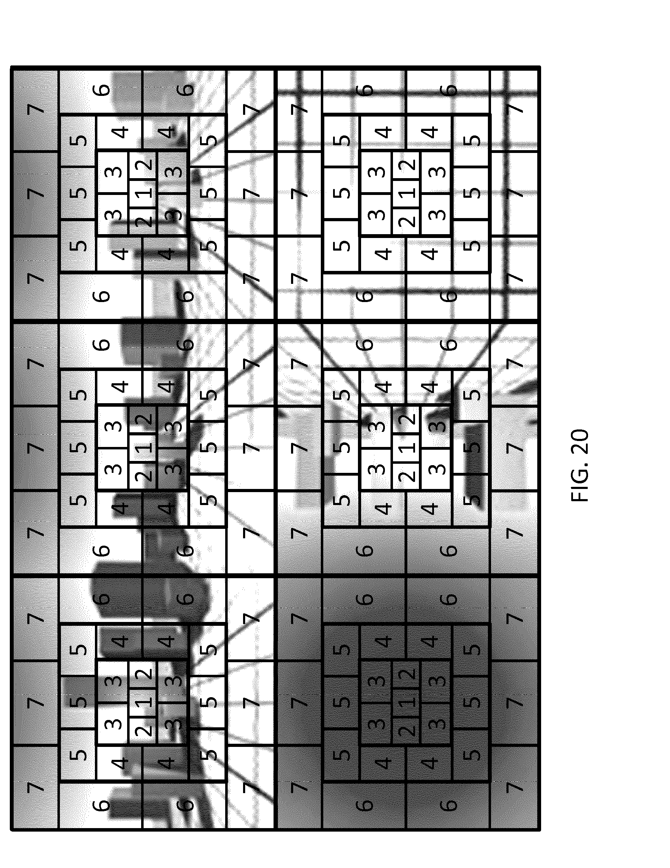

Referring now to figures 19 and 20, we detail an adaptation of the size of the CTU blocks in case of equirectangular mapping and cubic mapping respectively, according to another embodiment of the present disclosure.

In the present embodiment, the CTU is rectangular. According to that embodiment, the same concepts as disclosed above in relation with figures 17 and 18 apply in the present case, but with the dimensions (i.e. the width and height along the x and y coordinate respectively) of the CTU of adapted size (including the first CTU) are adapted according to the horizontal/vertical pixel densities.

According to different variants, the width (respectively height) of the CTU of adapted size is obtained as:

- a nominal size divided by an average value of a horizontal (respectively vertical) pixel density function computed over the block;
- a nominal size divided by a median value of a horizontal (respectively vertical) pixel density function computed over the block;
- a nominal size divided by the value of a horizontal (respectively vertical) pixel density function taken at the pixel located at the center of the block.

In the embodiment illustrated in figure 19 (equirectangular mapping), the CTU mapping starts with the center row and follows in raster scan order for the bottom part of the image; from the middle to bottom and and from left to right, and for the top part of the image, from the middle to top and from left to right. In the embodiment illustrated in figure 20 (cubbic mapping), the order is from a center of a face, then following a spiral around the center. At each step, the CTU size is rounded so that the width (or height) of the spiral row is an integer multiple (or power of two) of previous row CTU size.

Here again, the embodiment disclosed herein could apply equivalently to adapt the size of a CU, PU or TU.

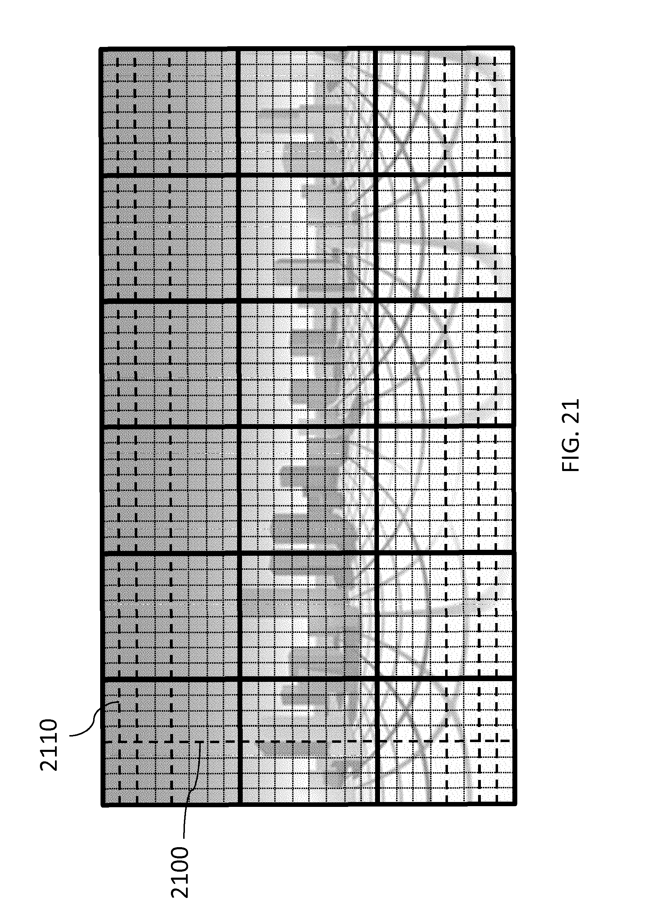

Referring now to figure 21, we detail a split of a subblock according to an embodiment of the present disclosure.

Refering to our discussion at the beginning of this disclosure, such subblock can be for instance a CU, PU or TU in case the considered video coding standard is HEVC. Indeed, in such standard, the size decided for the CTU drives the maximum allowable size for the subbloks. More particularly, the size for those subbloks is derived from this maximum allowable size following a splitting process defined in the standard.

In one embodiment, the maximum allowable size is derived based on the method disclosed above in relation with figures 17 to 20. In another embodiment, the size of the current block is not adapted as disclosed with figure 17 to 20, but by a splitting process as disclosed below. In this embodiment, the maximum allowable size is then the original size of the current block. As for the selection of the size of the block BLK, the inventors propose to take advantage of the knowledge of the 2D pixel density function for improving the performances of known coders/decoders. More particularly, in the present embodiment, it is proposed to split such subblock from its maximum allowable size (e.g. the CTU size, for a CU, the CU size for a PU, etc.) according to a criterion depending on the pixel density function. Indeed, low pixel density areas won't benefit from small block intra prediction, and one coding mode is more appropriate when the block is consistent, so as to reduce distortions in inter predictions. Consequently, when the shape of the subblocks can be rectangular, splits can be inferred in one dimension so that subblock shape reflect pixel density i.e. the topology depends on the pixel density.

According to a first variant, a vertical split (e.g. corresponding to a vertical fold line 2100) is decided if an average value of the horizontal pixel density function over an average value of the vertical pixel density function is greater than a threshold, e.g. if:

$$mean\{Density_{2D_h}(x,y),(x,y) \in B\} > 2 \times mean\{Density_{2D_v}(x,y),(x,y) \in B\}$$

with B the considered subblock.

Conversely, a horizontal split (e.g. corresponding to a horizontal fold line 2110) is decided if an average value of the vertical pixel density function over an average value of the horizontal pixel density function is greater than a threshold, e.g. if:

$$mean\{Density_{2D_v}(x,y),(x,y) \in B\} > 2 \times mean\{Density_{2D_h}(x,y),(x,y) \in B\}$$

with B the considered subblock.

Such a variant allows maintaining a same amount of information in both directions (vertical and horizontal).

According to a second variant, a vertical split (e.g. corresponding to a vertical fold line 2100) is decided if a maximum value of the horizontal pixel density function over a maximum value of the vertical pixel density function is greater than a threshold. For instance, the width of the subblock after splitting (Max-width) is derived from a maximal width of the subblock before splitting (MAX-CU-WIDTH) according to:

$$\text{Max-width} = \text{MAX-CU-WIDTH} \gg \left\lfloor log_2 \left( \frac{max\{Density_{2D_h}(x,y),(x,y) \in B\}}{max\{Density_{2D_v}(x,y),(x,y) \in B\}} \right) \right\rfloor$$

with B the considered subblock, » is the binary shifting operator, and ⌊⌋ is the default integer part operator ("floor" operator). In that case, a splitting occurs if the maximum value of the horizontal pixel density function is greater than two times the maximum value of the vertical pixel density function.

Conversely, a horizontal split (e.g. corresponding to a horizontal fold line 2110) is decided if a maximum value of the vertical pixel density function over a maximum value of the horizontal pixel density function is greater than a threshold. For instance, the height of the subblock after splitting (Max-height) is derived from a maximal height of the subblock before splitting (MAX-CU-HEIGHT) according to:

$$\text{Max-height} = \text{MAX-CU-HEIGHT} \gg \left\lfloor log_2 \left( \frac{max\{Density_{2D_v}(x,y),(x,y) \in B\}}{max\{Density_{2D_h}(x,y),(x,y) \in B\}} \right) \right\rfloor$$

with B the considered subblock.

Such a variant allows maintaining a same amount of information in both directions (vertical and horizontal).

According to a third variant, a vertical split (e.g. corresponding to a vertical fold line 2100) is decided if a maximum value of the horizontal pixel density function over a minimum value of the horizontal pixel density function is greater than a threshold, e.g.:

$$max\{Density_{2D_h}(x,y),(x,y) \in B\} > 2 \times min\{Density_{2D_h}(x,y),(x,y) \in B\}$$

 with B the considered subblock.

Conversely, a horizontal split (e.g. corresponding to a horizontal fold line 2110) is decided if a maximum value of the vertical pixel density function over a minimum value of the vertical pixel density function is greater than a threshold, e.g.:

$$max\{Density_{2D_v}(x,y),(x,y) \in B\} > 2 \times min\{Density_{2D_v}(x,y),(x,y) \in B\}$$

with B the considered subblock.

It must be noted that the three variants discussed above are not exclusive and can be used together and combined.

In one embodiment, the splitting process is recursive and the above-discussed criteria are applied successively to the subblocks obtained from one given block while they are valid. Once the criteria used for deciding the splitting is no more valid then the splitting process stops and is reinitialized for another block.

After having experienced the splitting policy according to the disclosed method, the resulting subblocks can be further splitted by a rate distortion optimization (RDO) process performed by an encoder.

According to one variant, the splitting of the subblock according to the disclosed method may be signaled in the bitstream to the decoder (e.g. splitting of a CU into a set of TU, or splitting of a macroblock into a set of subblocks...) using a syntax element, e.g. the existing syntax of the standard used to signal splitting information. Such syntax element is generally coded in particular syntax elements associated to the CU, PU or TU, or macroblock. According to another variant of this embodiment, no signaling is used and it is assumed that the decoder performs the same derivations for determining the splitting of the subblock according to the pixel density function.

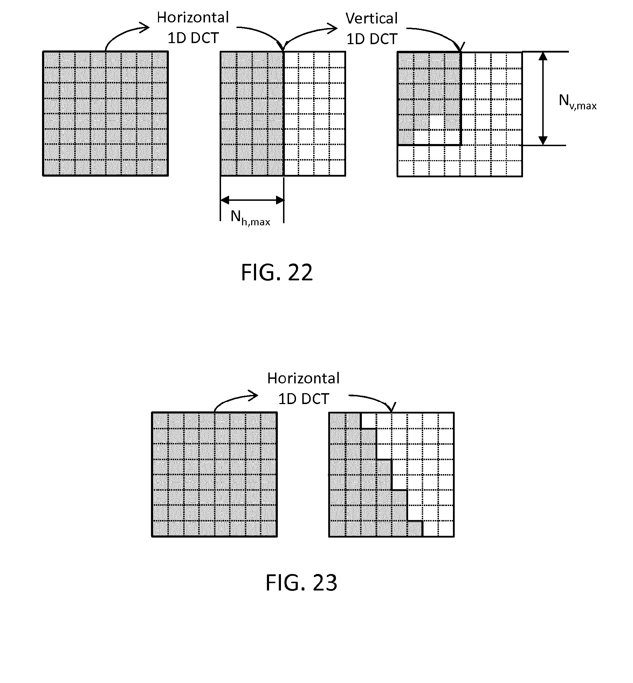

Referring now to figure 22, we detail a limitation in the number of transformed coefficient according to an embodiment of the present disclosure. As discussed previously, for a given subblock B of size w x h (where w is the width and h is the block height), due to the projection operation, the amount of pixels originaly present in the 3D surface that are retrieved in the considered subblock of the resulting 2D picture is less than w x h pixels of data. It is upper-bounded by the following quantity:

$$w \times max\{Density_{2D_h}(x,y), (x,y) \in B\} \times h \times max\{Density_{2D_v}(x,y), (x,y) \in B\}$$

where $max\{Density_{2D_h}(x,y), (x,y) \in B\}$ (respectively $max\{Density_{2D_v}(x,y),(x,y) \in B\}$) is the maximum horizontal (respectively vertical) density value over the subblock B. Consequetly, having a reduced number of "effective pixels" (i.e. of pixels effectively carrying information) than the number of pixels corresponding to the pixel grid in the considered subblock B, the quantity of information is expected to be reduced accordingly.

It thus appears that the subblock B, once transformed into the frequency domain, can be represented over a reduced number of transform coefficients, i.e. less than w x h coefficients that could be expected originaly in respect of the size of that subblock B.

In one embodiment, the size of the subblock B is derived based on the method disclosed above in relation with figures 17 to 21.

In another embodiment, the size of the subblock B is derived according to a known splitting method.

In other words, some transform subblocks in the picture can be made sparse (i.e. some coefficients inside the transform block can be anticipated as equal to zero), as a function of the projected picture pixel density at the considered block's spatial location.

Consequently, an incomplete transform may be applied to the subblocks in order to deliver such sparse transformed subblocks according to a criterion function of a pixel density function. The efficiency of the implementation of the transform is therefore improved compared to the present implementation for a given size of subblock.

In a variant, it is proposed to perform the following acts for implementing an incomplete 1 D transform according to the present disclosure (figure 22 left and center):

1. Determine the maximum pixel density value along the horizontal direction (i.e. along the X axis), in the whole spatial area covered by the current subblock. This leads to the following computation:

$$D_{h,max}^B = max\{Density_{2D_h}(x,y), (x,y) \in B\}$$

2. Determine the maximum number of non-zero coefficients $N_{h,max}$ that can be generated by the horizontal 1D transform according to a criterion function of the horizontal pixel density function.
3. Compute horizontal 1D transform, by calculating the transform coefficients only for the $N_{h,max}$ lowest frequency coefficients, and setting other transform coefficients to zero.

In case the equirectangular mapping is used, the above three acts are sufficient for implementing the density-based incomplete transform, because the pixel density only depends on the y-coordinate of the pixel in the picture (see our discussion above in respect of figure 15A and 15B). Thus the vertical 1 D transform is left unchanged compared to the prior art.

In case where the density also varies according along the y-axis inside the mapped picture (as may happen for instance in a cubic mapping as discussed above in relation with figures 16A and 16B), then the proposed embodiment includes the following acts, for the incomplete vertical 1 D transform computation (figure 22 center and right):

4. Determine the maximum pixel density value along the vertical direction (i.e. along the Y axis), in the whole spatial area covered by the current subblock. This leads to the following computation:

$$D^B_{v,max} = \max\{\text{Density}_{2D_V}(x, y), (x, y) \in B\}$$

5. Determine the maximum number of non-zero coefficients $N_{v,max}$ that can be generated by the vertical 1 D transform according to a criterion function of the vertical pixel density function.

6. Compute vertical 1 D transform, by calculating the transform coefficients only for the $N_{v,max}$ lowest frequency coefficients, and setting other transform coefficients to zero.

In one exemplary embodiment, the $N_{h,max}$ and the $N_{v,max}$ values are given by:

$$N_{h,max} = \alpha \times W \times D^B_{h,max}$$

$$N_{v,max} = \alpha \times H \times D^B_{v,max}$$

with $\alpha$ a weighting factor greater or equal to one (e.g. equal to 1.2).

In another exemplary embodiment, the $N_{h,max}$ and the $N_{v,max}$ values are given by:

$$N_{h,max} = W + \beta \times \log_2\left(D^B_{h,max}\right)$$

$$N_{v,max} = H + \beta \times \log_2\left(D^B_{v,max}\right)$$

with $\beta$ a weighting factor between 0 and 1, e.g. equal to 0.8 ( $D^B_{h\,(or\,v),max}$ being less than 1, $\log\_2(D^B_{h\,(or\,v),max})$ is negative.)

Practically speaking, the transform is now implemented for a subblock that may be rectangular and not square. If we recall that a separable 2D integer transform is formulated as follows:

$$\forall X \in \mathbb{Z}^{n \times n}, T(X) = A \cdot X \cdot A^T$$

where X is the 2D square block to transform, and A is the considered orthogonal transform matrix, the matrix implementation of the incomplete transform takes the following form:

$$\forall X \in \mathbb{Z}^{m \times n}, T(X) = A \cdot X \cdot B^T$$

where A and B are respectively m x m and n x n transform matrices. The 2D separable transform thus consists in the successive application of horizontal and vertical 1 D transform. Considering the horizontal case in the sequel, without any loss in generality, the horizontal discrete cosine transform (DCT) is expressed as follows:

$$T_h(X) = X \cdot B^T$$

Given the $N_{h,max}$ maximum of non-zero coefficients in the target transform block, this matrix computation is performed as follows:

$$\forall j \in [1, m], \forall i \in [1, n], T_h(j, i) = \begin{cases} \sum_{k=1}^{n} X_{j,k} \cdot B_{k,i}^T & if\ i \in [1, N_{h,max}] \\ 0\ otherwise \end{cases}$$

Similar approach is done for the vertical 1 D transform.

In one variant, the number of non-zero coefficients may be signaled in the bistream to the decoder using a syntax element, e.g. the existing syntax of the standard. According to another variant of this embodiment, no signaling is used and it is assumed that the decoder performs the same derivations as detailed above for the coder in order to determine the non-zero coefficients according to the pixel density function in order to apply an incomplete inverse transform.

Referring now to figure 23, we detail a limitation in the number of transformed coefficient according to another embodiment of the present disclosure.

According to the present embodiment, the design of density-based incomplete transforms takes into account the fact that the 2D density function varies not only between successive coding blocks but also from pixel line to pixel line and from pixel column to pixel column in the considered mapped picture.

Consequently, it is possible to enhance the incomplete transform concept discussed above in relation with figure 22, by specifying the separable 2D transform with multiple incomplete 1 D horizontal and vertical transforms.

However, the variations in the number of coefficients can only be applied to the first separable sub-transform. For the second transform step, the max density along the considered direction in the block must be used. In a variant of the embodiment, the order of sub-transforms to be applied is chosen to begin with the direction having the most density variation in the block.

According to another variant, the order of sub-transforms to be applied is chosen to end with the direction having the smallest maximum density value in the block, in order to ensure that a maximum number of high-frequency coefficients are forced to be zero in the proposed transform process.

For instance, if the first separable sub-transform is selected as being the horizontal 1 D transform, the following acts apply:

1. For each line index $j \in [B_{top}, B_{bottom}]$, where $B_{top}$ and $B_{bottom}$ are respectively the y-coordinate of the top and bottom edges of block B.
Determine the maximum number of non-zero transform coefficients $N_{h,max}(j)$ (e.g. according to the embodiment discussed above for deriving $N_{h,max}$) as a function of the pixel density level for y- coordinate equal to $j$: $D_h(j)$.

$$D_h(j) = max\{Density_{2D_h}(x, j), (x, j) \in B\}$$

2. Compute the 1 D horizontal transform of block B as follows:

$$\forall a \in [1, m], \forall \in [1, n], T_h(j, i) = \begin{cases} \sum_{k=1}^{n} X_{j,k} \cdot B_{k,i}^T & if\ i \in [1, N_{h,max}(j)] \\ 0\ otherwise \end{cases}$$

According to another embodiment, the embodiments disclosed with figures 22 or 23 may be applied to a current block of original size. In this embodiment, the size of the current block is adapted by applying an incomplete transform according to any one of the variants disclosed with figures 22 or 23. In this way, a size corresponding to a size of the transform to be applied to the current block is adapted.

In a standard like HEVC, it appears that the position of the last significant coefficient in a TU following the forward scan order is coded first, before coding the transform coefficients themselves. The position of the last significant coefficient in a TU is coded by explicitly signaling its (X,Y)-coordinates. Coordinate X indicates the column number and Y the row number.

However, as explained above in relation with figure 22, if the number of "effective pixels" (i.e. of pixels effectively carrying information) is lower than the number of pixels corresponding to the pixel grid in the considered subblock B, the quantity of information is also expected to be reduced accordingly. Consequently, it is proposed in one embodiment of the present disclosure that if the pixel density function is sufficiently low in a given subblock, it can be assumed that all the transform coefficients can be set to zero (that is equivalent to selecting a size that is null for the corresponding TU) and that the coding of the last significant coefficient in the considered TU can be skipped. This thus allows reducing the bit rate of the bitstream by reducing the quantity of syntax element transmitted. However, this requires that the decoder performs the same derivations as detailed above for the coder in order to determine that the coding of the last significant coefficient was not required and that all the transform coefficients of the TU are null. For instance, the last significant coefficient in the considered TU can be skipped if a pixel density function average value computed over the block corresponding to the TU is lower than a predetermined threshold. Such a predetermined threshold should be known both at the encoder and the decoder so that the decoder can perform the same derivation.

Furthermore, in a standard like HEVC, a significance map is used to code zero and non-zero coefficients in a considered TU. Since the last significant coefficient position is already known, the significance map scan pass starts at the coefficient before the last significant coefficient in the scan order, and continues backwards until the top-left coefficient in the transform block has been processed. This backward scanning is performed coefficient group (CG) by coefficient group in the transform block, and is performed coefficient by coefficient inside each CG.

However, in one embodiment, it is proposed to avoid coding the significance of coefficients that are anticipated to be zero, based on the knowledge of the pixel density function as explained above. In particular, if the most advanced embodiment for the design of incomplete transform was used (e.g. in which the number of non-zero transform coefficients $N_{h,max}(j)$ is selected on a line by line basis), then the construction of incomplete transform can be reproduced strictly in the same way on the decoder side. Therefore, an a priori map of necessarily zero coefficients can be deduced by the decoder, and used to decode an incomplete significance map. This thus allows reducing the bit rate of the bitstream by reducing the quantity of information transmitted for the significance map. However, this requires that the decoder performs the same derivations as detailed above for the coder in order to determine which coefficients are anticipated to be zero despite they are not indicated as such in the significance map.

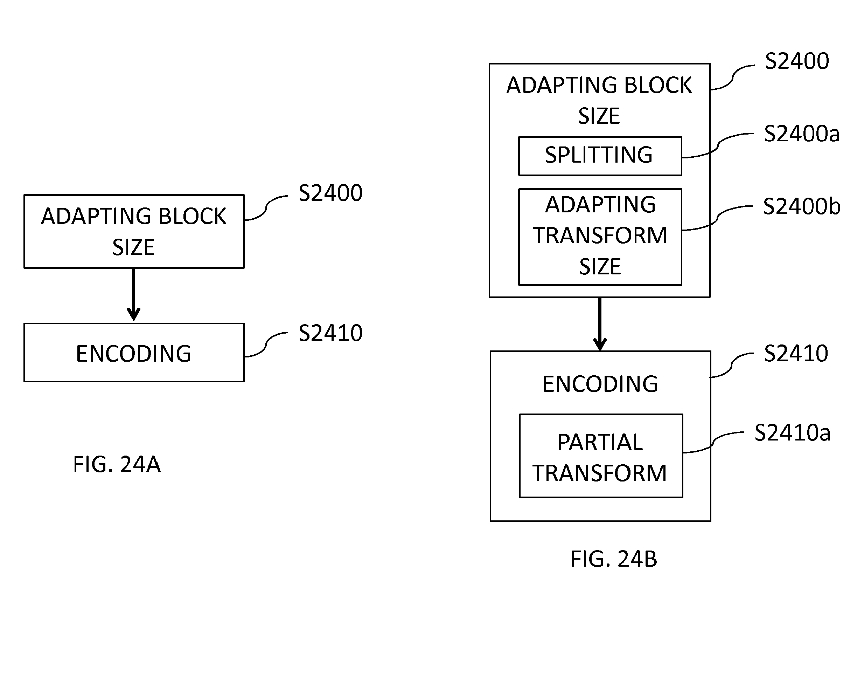

Figures 24A and 24B illustrate block diagrams for an exemplary method for encoding an omnidirectional video into a bistream according to different embodiments of the present disclosure.

As discussed above in relation with figures 13A through 14F, at least one picture of such omnidirectional video is represented as a 3D surface, such as a sphere or a cube. In that case, the 3D surface is projected onto at least one 2D picture using a projection function like an equi-rectangular projection or a cube mapping.

However, the present principle could be applied to any 3D repesentation of an omnidirectional video where the 3D surface is projected onto at least one 2D picture using a projection function.

Indeed, such projection function results in any case in deterministic distortions that lead to a 2D pixel density function as discussed above in relation with figures 15A though 16B.

According to one embodiment of the proposed method, the size of a block BLK used by an existing video codec (e.g. HEVC, H.264/AVC, JVET, VP10, QTBT, etc.) is adapted S2400 according to a pixel density function determined according to the projection function used for projecting the 3D surface onto the 2D picture according to the method disclosed above in relation with figures 17 to 20.

In one variant, the block BLK is a square block and its width is targeted to be equal to its height. In that case, its width and its height are adated jointly. In another variant, the block BLK is rectangular and its width is adapted independently of its height.

Depending on the video coding standard considered, such block BLK may be identified as the macroblocks (MB) (such as in H.264/AVC) or the Coding Tree Units (CTU) (such as in HEVC), i.e. the units of pixels delivered by a subdividing module of the encoder. It can further be identified to other subblocks encountered in those standards. For instance, according to an HEVC coder, it can be a CU, a PU, or a TU.

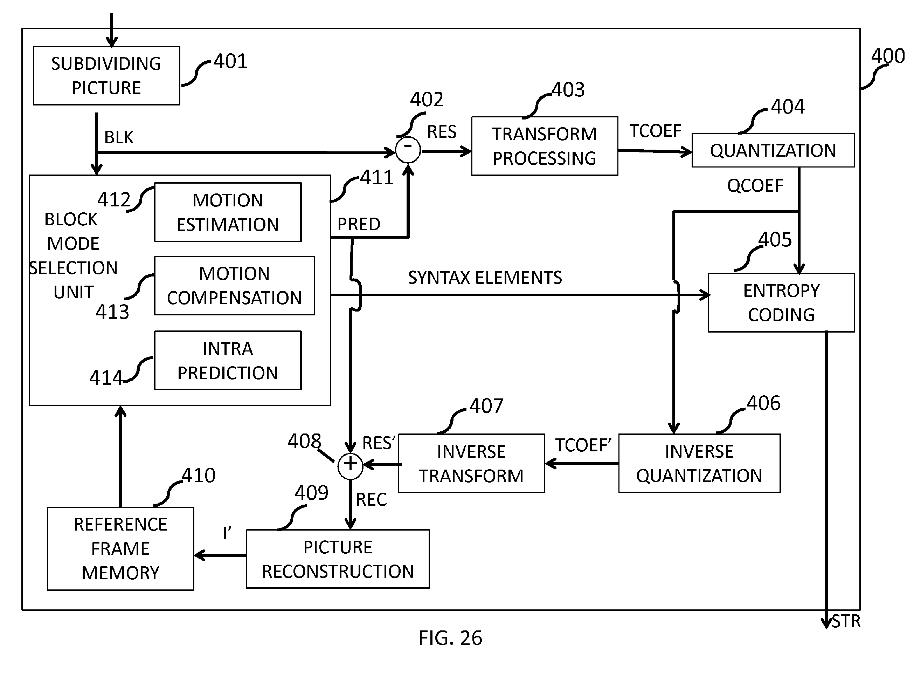

The block of adapted size is then encoded S2410 in order to deliver the bitstream. In the present embodiment, a conventional video encoder implementing a given standard performs the encoding operation. In one variant, the encoder is a HEVC encoder as discussed later on in relation with figure 26.

As discussed above in relation with figures 17 and 18, in one variant the value of the adapted size of the block BLK may be signaled in the bistream to the decoder using a syntax element, e.g. an existing syntax element of the standard. For example, in case of an HEVC standard, the adapted size of the blocks may be signaled in a Sequence Parameter Set (SPS) of the bitstream or in a Picture Parameter SET (PPS). According to another variant of this embodiment, no signaling is used and it is assumed that the decoder will perform the same derivations for determining the adapted size of the block BLK according to the density function.

In another embodiment, the block of adapted size is further split S2400a in subblocks according to a criterion function of the pixel density function as disclosed above in relation with figure 21.

Such subblock can be for instance a CU, PU or TU in case the considered video coding standard is HEVC and both vertical or horizontal split may be decided depending on the criterion used in respect of the horizontal or vertical pixel density function considered (i.e. a split of such subblock may be decided from its maximum allowable size, e.g. the CTU size, for a CU, the CU size for a PU, etc.). According to this embodiment, the encoding operation S2410 is performed for each of the subbloks that compose the block of adapted size in order to deliver the bitstream.

As discussed above in relation with figure 21, in one variant the splitting of the subblock (e.g. splitting of a CU into a set of TU) may be signaled in the bistream to the decoder using a syntax element, e.g. an existing syntax element of the standard. Such syntax element is generally coded in a particular syntax elements associated to the CU, PU or TU. According to another variant of this embodiment, no signaling is used and it is assumed that the decoder will perform the same derivations for determining the splitting of the subblock according to the density function.

In another embodiment, the transform operation (e.g. a DCT in H.264/AVC or HEVC) enforced during the encoding operation is applied in a partial form.

According to this embodiment, a size of the transform is determined (S2400b) according to the method disclosed in figures 22 and 23.

Then, an incomplete transform may be applied (S2410a) to the subblocks in order to deliver sparse transformed subblocks according to a criterion function of a pixel density function as discussed above in relation with figures 22 and 23.

In one variant, it is proposed to implement an incomplete 1 D transform (e.g. in case of equirectangular mapping that results in a 2D density function that depends of only one coordinate, Y). In another variant, it is proposed to implement an incomplete transform for both the horizontal and the vertical 1 D transform.

In one variant, the number of non-zero coefficients may be signaled in the bistream to the decoder using a syntax element, e.g. the existing syntax of the standard (e.g. in a significance map in the bistream). According to another variant of this embodiment, no signaling is used and it is assumed that the decoder will perform the same derivations as detailed above for the coder in order to determine the non-zero coefficients according to the pixel density function in order to apply an incomplete inverse transform.

According to another embodiment, delivering an adapted size when adapting (S2400) the size of the block BLK may be optional. According to this embodiment, adapting the size of the block BLK comprises splitting the current blokc BLK into a set of subblocks. According to this embodiment, the size of the block BLK is adapted by splitting the current block BLK in a same manner as disclosed above (S2400a) for the block BLK of adapted size.

According to another embodiment, delivering an adapted size when adapting (S2400) the size of the block BLK may be optional. According to this embodiment, adapting (S2400) the size of the block BLK delivers an adapted size of the transform (S2400b) to be applied to the block BLK when encoding the block BLK as disclosed above in relation with figures 22 and 23. According to this embodiment, the block BLK is encoded by applying the incomplete transform using the adapted size of the transform in a similar manner as disclosed above (S2410a). This embodiment allows adapting the size of the suppport of the transform to be applied to the block.

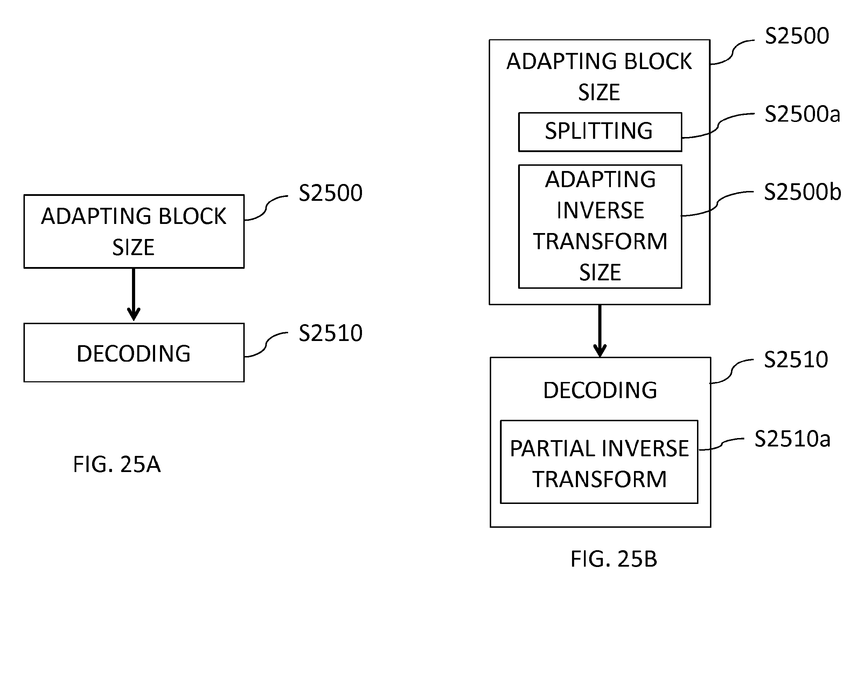

Figures 25A and 25B illustrate block diagrams for exemplary methods for decoding a bistream representative of an omnidirectional video according to different embodiments of the present disclosure.

According to one embodiment of the proposed method, the size of a block BLK of an existing video codec (e.g. HEVC, H.264/AVC, JVET, VP10, QTBT, etc.) is adapted S2500 in order to further apply the decoding operation S2510 on the block of adapted size for delivering the corresponding 2D picture.

As discussed extensively in relation with figures 17 and 18, and in relation with figures 24A and 24B, in one variant the value of the adapted size of the block BLK may be signaled in the bistream to the decoder. In that case, the decoder retrieves the size of the block to be decoded according to this signaled value and the decoder is a conventional video decoder implementing a given standard (i.e. no modification of the decoder is required for decoding a 2D picture encoded according to the method disclosed herein).

According to another variant, no signaling is used and it is assumed that the decoder performs the same derivations as the encoder for determining the adapted size of the block BLK based on the pixel density function. In that case, the decoder performs the same operations as the encoder described above in relation with figures 17 and 18, and in relation with figures 24A and 24B in order to determine the adapted size of the block to be decoded, thus minimizing the syntax elements going through the network and thus the bitrate of the bitstream.

Depending on the video coding standard considered, such block BLK may be identified as the macroblocks (MB) (such as in H.264/AVC) or the Coding Tree Units (CTU) (such as in HEVC), i.e. the units of pixels delivered by a subdividing module of a decoder. It can further be identified to other subblocks encountered in those standards. For instance, according to an HEVC coder, it can be a CU, a PU, or a TU.

In another embodiment, the block of adapted size is further split S2500a in subblocks and the decoding operation S2510 is performed for each of the subbloks that compose the block of adapted size in order to deliver the corresponding 2D picture.

As discussed above in relation with figure 21, and in relation with figures 24A and 24B, in one variant the splitting of the subblock (e.g. splitting of a CU into a set of TU, ...) is signaled in the bistream to the decoder using a syntax element, e.g. the existing syntax of the standard for signalling splitting information. Such syntax element is generally coded in a particular syntax elements associated to the CU, PU or TU. In that case, the decoder retrieves the splitting information of the subblock to be decoded according to this signaled value and the decoder is a conventional video decoder implementing a given standard (i.e. no modification of the decoder is required for decoding a 2D picture encoded according to the method disclosed herein).

According to another variant of this embodiment, no signaling is used and it is assumed that the decoder performs the same derivations for determining the splitting information of the subblock based on the pixel density function, thus minimizing the syntax elements going through the network and thus the bitrate of the bitstream.

As discussed in relation with figure 21, and in relation with figures 24A and 24B, such subblock can be for instance a CU, PU or TU in case the considered video coding standard is HEVC and both vertical or horizontal split may be decided depending on the criterion used in respect of the horizontal or vertical pixel density function considered.

In another embodiment, the inverse transform operation S2510a (e.g. a inverse DCT in H.264/AVC or HEVC) enforced during the decoding operation is applied in a partial form.

As discussed above in relation with figure 22, and in relation with figures 24A and 24B, the number of non-zero coefficients to be used for computing the inverse transform may be signaled in the bistream to the decoder using the existing syntax of the standard (e.g. in a significance map in the bistream). In that case, the decoder retrieves the number of non-zero coefficients according to this signaled value and the decoder is a conventional video decoder implementing a given standard (i.e. no modification of the decoder is required for decoding a 2D picture encoded according to the method disclosed herein).

According to another variant of this embodiment, no signaling is used and it is assumed that the decoder will perform the same derivations as detailed above for the coder in order to determine the non-zero coefficients according to the pixel density function in order to apply an incomplete inverse transform, thus minimizing the syntax elements going through the network and thus the bitrate of the bitstream.

In one variant, it is proposed to implement an incomplete 1 D transform (e.g. in case of equirectangular mapping that results in a 2D density function that depends of only one coordinate, Y). In another variant, it is proposed to implement an incomplete transform for both the horizontal and the vertical 1 D transform.

According to another embodiment, delivering an adapted size when adapting (S2500) the size of the block BLK may be optional. According to this embodiment, adapting the size of the block BLK comprises splitting the current blokc BLK into a set of subblocks. According to this embodiment, the size of the block BLK is adapted by splitting the current block BLK in a same manner as disclosed above (S2500a) for the block BLK of adapted size.

According to another embodiment, delivering an adapted size when adapting (S2500) the size of the block BLK may be optional. According to this embodiment, adapting (S2500) the size of the block BLK delivers an adapted size of the inverse transform (S2500b) to be applied to the block BLK when decoding the block BLK as disclosed above in relation with figures 22 and 23. According to this embodiment, the block BLK is decoded by applying the incomplete inverse transform using the adapted size of the inverse transform in a similar manner as disclosed above (S2510a). This embodiment allows adapting the size of the suppport of the inverse transform to be applied to the block.

Figure 26 illustrates block diagrams for an exemplary video encoder 400 implementing a method for encoding the omnidirectional video into a bistream according to any of the embodiments disclosed in relation with figures 24A and 24B. Such encoder 400 may be part for instance of an immersive system such as disclosed herein.

The video encoder 400 is disclosed as conforming to an HEVC coder, however the present principle may apply to any 2D video coding schemes processing video as a sequence of 2D pictures.

Classically, the video encoder 400 may include several modules for block-based video encoding, as illustrated in figure 26. A 2D picture I representative of a projected picture from an omnidirectional, video to be encoded is input to the encoder 400.

Firstly, a subdividing module 401 divides the picture I into a set of units of pixels.

The encoding process is described below as appling on a unit of pixels that is called a block BLK. Such a block BLK may correspond to a macroblock, or a coding tree unit, or any subblock from one of the units described above, or any other layout of subdivision of picture I comprising luminance samples and chrominance samples, or luminance samples only.

The encoder, as well as the decoder, described below is for illustration purposes. According to some embodiments, encoding or decoding modules may be added, or removed or may vary from the following modules. However, the principle disclosed herein could still be applied to these embodiments.

The subdividing module divides the picture I into a set of blocks of adapted size according to any embodiments disclosed in relation with figures 17 to 20. According to any one of these embodiments, the size of a block BLK, e.g. a CTU, to encode is adapted according to a pixel density function determined according to the projection function used for projecting the 3D surface onto the 2D picture according to the principle disclosed with figures 13A through 14F. The value of the adapted size of the block BLK may be signaled in the bitstream to the decoder a syntax element, e.g. an existing syntax element of the standard. Such syntax element is generally coded in a Sequence Parameter Set (SPS) of the bitstream. According to another variant, no signaling is used and it is assumed that the decoder will perform the same derivations for determining the adapted size of the block BLK according to the pixel density function.

The encoder 400 performs encoding of each block BLK of the picture I as follows. The encoder 400 comprises a mode selection unit 411 for selecting a coding mode for a block BLK of a picture to be coded, e.g. based on a rate/distorsion optimization. Such a mode selection unit comprising:

- a motion estimation module 412 for estimating motion between one current block of the picture to be coded and reference pictures,
- a motion compensation module 413 for predicting the current block using the estimated motion,
- an intra prediction module 414 for spatially predicting the current block.

The mode selection unit 411 may also decide whether subdivision of the block is needed according to rate/distorsion optimization for instance. In that case, the mode selection unit 411 then operates for each subblock of the block BLK. In case of an HEVC coder, the subblocks may correspond to CU, PU or TU. The principle disclosed in relation with figures 17 to 20 may also be applied to a subblocks, i.e. the size of a CU, PU or TU may be adapted according to the density function computed for the CTU.

A splitting of a subblock may then occur according to to any embodiments disclosed in relation with figure 21. The splitting may be signaled in the bistream to the decoder using a syntax element, e.g. the existing syntax of the standard for specifying splitting of a CTU into a set of CU. According to another variant of this embodiment, no signaling is used and it is assumed that the decoder will perform the same splitting of the CTU into a set of CU according to the pixel density function.

According to another embodiment, the size of a CU is splitted so as to provide an adapted size for a PU according to the pixel density function. The splitting may be signaled in the bistream to the decoder using a syntax element, e.g. the existing syntax of the standard for specifying splitting of a CU size for the PU. According to another variant of this embodiment, no signaling is used and it is assumed that the decoder performs the same splitting of the CU size for adapting the size of the PU according to the pixel density function.

When the CTU is splitted, the mode selection unit selects a coding mode for CU, and eventually each PU, of the CTU.

Once a coding mode or coding modes is/are selected for the current block BLK, the mode selection unit delivers a predicted block PRED and corresponding syntax elements to be coded in the bitstream for performing the same block prediction at the decoder. When the current block BLK has been split, the predicted block PRED is formed by the set of predicted subblocks (CU/PU) delivered by the mode selection unit for each subblocks (CU/PU).

A residual block RES is then obtained by substracting, 402, the predicted block PRED from the original block BLK.

The residual block RES is then transformed by a transform processing module 403 delivering a transform block TCOEF of transformed coefficients. In case, the transform processing module 403 operates on transform blocks of size smaller than the residual block RES, the transform processing module 403 delivers a set of corresponding transform blocks TCOEF. For instance, a rate/distorsion optimization may be performed to decide whether large transform block or smaller transform block should be used. In case of an HEVC coder, the transform processing module 403 operates on block called transform unit (TU). According to an embodiment of the present principle, the size of a TU may be adapted according to a pixel density function depending on the projection function used for projecting the 3D surface onto the 2D picture as disclosed with figures 17 to 20 or figure 21. In that case, for the current block RES, the transform processing module 403 operates the transform for each TU of adapted size of the current block RES, using a transform function having a size corresponding to the adpated size of the current TU. The transform processing module 403 then delivers a set of transformed coefficients for each TU of the current block forming a transform block TCOEFF. According to a variant of this embodiment, the splitting to the residual block into a set of TU may be signaled to the decoder using the existing syntax of the standard for specifying splitting of a CU into a set of TU. According to another variant of this embodiment, no signaling is used and it is assumed that the decoder will perform the same splitting of the residual block in a set of TUs according to the density function computed for the residual block.

According to another embodiment, the transform processing module 403 operates the transform on the block RES using an incomplete transform as disclosed in relation with figures 22 and 23. The transform processing module then delivers a block of transformed coefficients TCOEFF of size equal to the current block RES. This embodiment is an encoder optimization allowing reducing complexity of the transform processing module.

In one variant, the number of non-zero coefficients may be signaled in the bistream to the decoder using a syntax element, e.g. the existing syntax of the standard (e.g. in a significance map in the bistream). According to another variant of this embodiment, no signaling is used and it is assumed that the decoder performs the same derivations as detailed above for the coder in order to determine the non-zero coefficients according to the density function in order to apply an incomplete inverse transform. Each delivered transform block TCOEF is then quantized by a quantization module 404 delivering a quantized transform block QCOEF of quantized residual transform coefficients.

The syntax elements and quantized residual transform coefficients of the block QCOEF are then input to an entropy coding module 405 to deliver the coded video data of the bistream STR.

For instance, HEVC uses a contextual arithmetic entropy coding, also known as CABAC. The arithmetic coding performed by the entropy coding module encodes an entire stream of bits, which is obtained after a suitable binarization of the symbols to encode (syntax element, quantized transform coefficients, etc..), by their joint probability, represented by an interval in (0, 1). The entropy coding module performs arithmetic coding by modelling the probabilities of the symbols through context models for different syntax elements and updating model states after encoding every bit. The context models initialize the probabilities based on the neighborhood encoding information.

The quantized residual transform coefficients of the quantized transform block QCOEF are processed by an inverse quantization module 406 delivering a block TCOEFF' of unquantized transform coefficients. The block TCOEF' is passed to an inverse transform module 407 for reconstructing a block of residual prediction RES'. When the transform processing module 403 operated on a set of TU from the current block RES, the inverse transform module 407 also operates on the same set of TU. The block RES' is thus formed by the inverse transformed samples for the set of TU.

A reconstucted version REC of the block BLK is then obtained by adding, 408, the prediction block PRED to the reconstructed residual prediction block RES'. The reconstructed block REC is stored in memory for later use by a picture recontruction module 409 for reconstructing a decoded version I' of the picture I. Once all the blocks BLK of the picture I have been coded, the picture reconstruction module 409 performs reconstruction of a decoded version I' of the picture I from the reconstructed blocks REC. Optionnally, deblocking filtering may be applied to the reconstructed picture I' for removing blocking artifacts between reconstructed blocks.

Once the reconstructed picture I' has been reconstructed and eventually deblocked, the resulting reconstructed picture is then added, 408, to a reference picture memory 410 for later use as a reference picture for encoding the following pictures of the set of pictures to code.

The bistream generated from the above-described encoding process is then transmitted over a data network or stored on a memory for immersive rendering of an omnidirectional video decoded from the bistream STR.

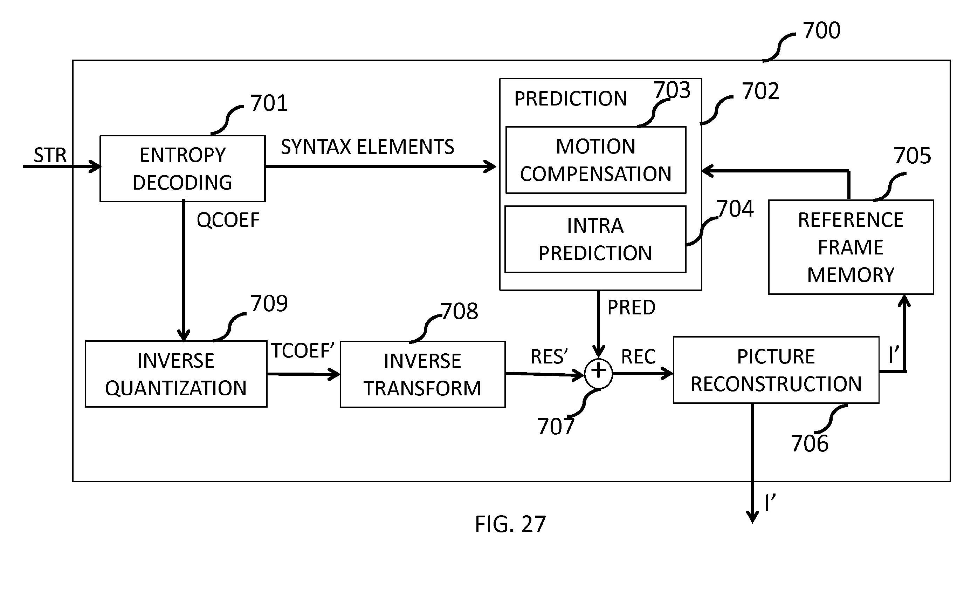

Figure 27 illustrates block diagrams for an exemplary decoder 700 implementing a method for decoding a bistream representative of an omnidirectional video according to any of the embodiments disclosed in relation with figures 25A and 25B. Such decoder 700 may be part for instance of an immersive system such as disclosed herein.

A bitstream STR representative of coded pictures representative of a projection of an omnidirectional video onto said 2D picture comprises coded data representative of at least one current block BLK of said 2D picture. Such a current block may have been coded according to an embodiment of the present disclosure.

According to an embodiment, the bistream STR may also comprise coded data representative of an item of information relating to the projection function.

The video decoder 700 disclosed herein performs the decoding of the pictures according to an HEVC video coding standard. However, the present principle could easily be applied to any video coding standards

The video decoder 700 performs the reconstruction of the omnidirectional video by decoding from the bitstream the coded pictures on a picture-by-picture basis and by decoding each picture on a block-by-block basis. According to the video compression scheme used, parallel processing may be used for decoding the bistream either on a picture basis or on a block basis. A picture I' is thus reconstructed from the compressed bistream as follows.

The coded data is passed to the video decoding modules of the video decoder 700 for reconstructing the blocks of the picture I'. According to the present principle, the size of the block to reconstruct depends on a pixel density function computed according to the projection function.

The video decoder 700 first decodes from the bistream a syntax element indicating the size of the CTU used for encoding the pictures of the 2D video, e.g such a size may be 16x16 32x32 or 64x64 pixels. Such syntax element is generally coded in a Sequence Parameter Set (SPS) of the bistream.

According to a variant, the size of the block to reconstruct is first computed from the decoded value representing the size of a CTU and according to the principle disclosed in relation with figures 17 to 20. According to this variant, no extra signalling is used and it is assumed that the decoder performs the same derivations for determining the adapted size of the block BLK according to the pixel density function as done by the encoder 400.

According to another variant, the adapted size of the CTU is decoded from the bistream. Then, the block with adapted size is reconstructed as follows.

As illustrated in figure 27, coded data is passed to an entropy decoding module 701 that performs entropy decoding and delivers a block QCOEF of quantized transform coefficients to an inverse quantization module 709 and syntax elements to a prediction module 702.

After entropy decoding, the block QCOEF of quantized transform coefficients is inverse quantized by the inverse quantization module 709 to deliver a block TCOEF' of dequantized transform coefficients.

The block TCOEF' of dequantized transform coefficients is inverse transformed by an inverse transform module708 delivering a residual prediction block RES'.

According to a variant, in case, the bistream syntax indicates that the residual prediction block has been adapted during encoding so as to operate the transform on blocks (TU) of size smaller than the residual block RES', the inverse transform module 708 operates the inverse transform for each TU of the residual prediction block to reconstruct. Such size adaptation or splitting may have been decided by the encoder according a rate/distorsion optimization process or for adapting the size of the TUs according to the principle disclosed with figures 17 to 20 or figure 21.

According to a variant, the adapted size or the splitting of the size of the residual block so as to provide an adapted size for the TU is signaled to the decoder using the existing syntax of the standard for specifying splitting of a size of a CU for the size of the TU. According to another variant of this embodiment, no signaling is used and it is assumed that the decoder performs the same size adaptation or splitting of the size of the residual block so as to provide an adapted size for the TU according to the pixel density function, as done by the encoder 400.

The inverse transform module 708 operates the transform for each TU associated to the residual block RES and delivers a block of samples (i.e. inverse transform coefficients) for each TU. The delivered blocks of samples thus form the residual prediction block RES'.

According to another embodiment, the inverse transform module 708 implements an incomplete transform as disclosed in relation with figures 22 and 23 in case the encoder has implemented an incomplete transform. This embodiment allows reducing the complexity of the transform processing module 403.

In one variant, the number of non-zero coefficients is signaled in the bistream to the decoder using a syntax element, e.g. the existing syntax of the standard (e.g. in a significance map in the bistream). According to another variant of this embodiment, no signaling is used and it is assumed that the decoder performs the same derivations as detailed above for the coder in order to determine the non-zero coefficients according to the density function, thus allowing applying an incomplete inverse transform.

The prediction module 702 builds a prediction block PRED according to the syntax element and using a motion compensation module 703 if a current block has been inter-predicted or an intra prediction module 704 if the current block has been spatially predicted.

A reconstucted block REC is then obtained by adding 707 the prediction block PRED to the reconstructed residual prediction block RES'. The reconstructed block REC is stored in memory 705 for later use by a picture recontruction module 706 for reconstructing a decoded picture I'. Once all the blocks of the picture I have been decoded, the picture reconstruction module 706 performs reconstruction of the decoded picture I' from the reconstructed blocks REC. Optionnally, deblocking filtering may be applied to the reconstructed picture I' for removing blocking artifacts between reconstructed blocks.

The reconstructed picture I' is then added to a reference picture in memory 705 for later use as a reference picture for decoding the following pictures of the set of pictures to decode.

The recontructed picture I' is then stored on a memory 705 or output by the video decoder apparatus 700 to an immersive rendering device 10 as disclosed above. The video decoder apparatus 700 may also be comprised in the immersive rendering device 80. In that case, the reconstructed picture I' is output by the decoder appartus to a display module of the immersive rendering device 80.

According to the immersive rendering system implemented, the disclosed decoder apparatus may be comprised in any one of the processing devices of an immersive rendering system such as disclosed herein for instance, in a computer 40, or a game console 60, or a smartphone 701, or an immersive rendering device 80, or an immersive wall 6000.

The apparatus decoder 700 may be implemented as hardware or software or a combination of hardware and software thereof.

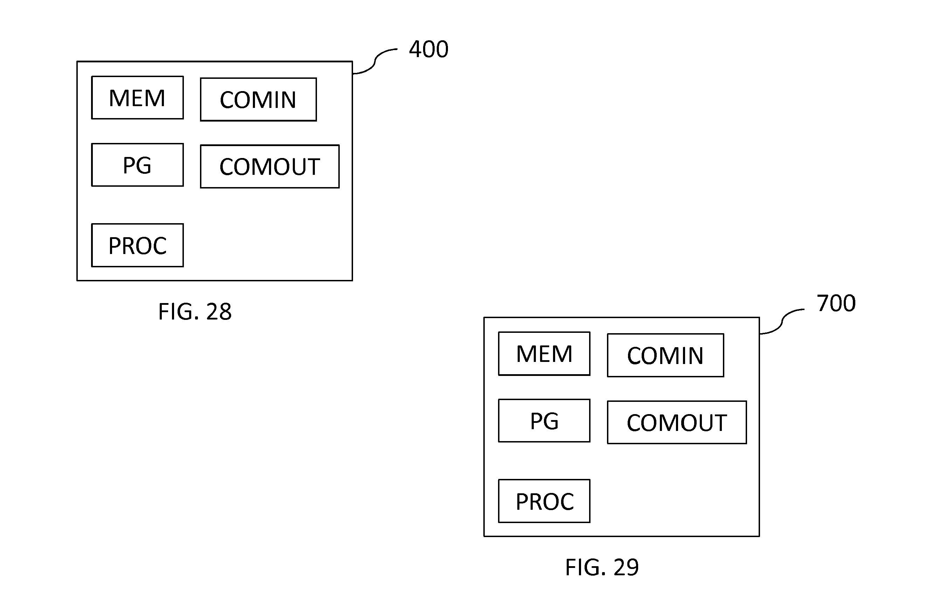

Figure 28 illustrates the simplified structure of an apparatus 400 for coding an omnidirectional video according to an embodiment. Such an apparatus is configured to implement the method for coding an omnidirectional video according to the present principle which has been described here above in reference with figures 24A and 24B.

According to an embodiment, the encoder apparatus comprises a processing unit PROC equipped for example with a processor and driven by a computer program PG stored in a memory MEM and implementing the method for coding an omnidirectional video according to the present principles.

At initialization, the code instructions of the computer program PG are for example loaded into a RAM (not shown) and then executed by the processor of the processing unit PROC. The processor of the processing unit PROC implements the steps of the method for coding an omnidirectional video which have been described here above, according to the instructions of the computer program PG.

The encoder apparatus comprises a communication unit COMOUT to transmit an encoded bitstream STR to a data network.

The encoder apparatus also comprises an interface COMIN for receiving a picture to be coded or an omnidirectional video to encode.

Figure 29 illustrates the simplified structure of an apparatus 700 for decoding a bitstream representative of an omnidirectional video according to an embodiment. Such an apparatus is configured to implement the method for decoding a bitstream representative of an omnidirectional video according to the present principle, which has been described here above in reference with figures 25A and 25B.

According to an embodiment, the decoder apparatus comprises a processing unit PROC equipped for example with a processor and driven by a computer program PG stored in a memory MEM and implementing the method for decoding a bitstream representative of an omnidirectional video according to the present principles.

At initialization, the code instructions of the computer program PG are for example loaded into a RAM (not shown) and then executed by the processor of the processing unit PROC. The processor of the processing unit PROC implements the steps of the method for decoding a bitstream representative of an omnidirectional video which has been described here above, according to the instructions of the computer program PG.

The apparatus may comprise a communication unit COMOUT to transmit the reconstructed pictures of the video data to a rendering device.

The apparatus also comprises an interface COMIN for receiving a bistream STR representative of the omnidirectional video to decode from a data network, or a gateway, or a Set-Top-Box.

**Claims**

1. A method for coding an omnidirectional video into a bitstream, at least one picture of said omnidirectional video being represented as a surface, said surface being projected onto at least one 2D picture using a projection function, said method comprising, for at least one current block of said at least one 2D picture,

   - adapting (S2400) a size of said at least one current block as a function of a pixel density function determined according to said projection function; and
   - encoding (S2410) said at least one current block into said bitstream using said adapted size.

2. An apparatus (400) for coding an omnidirectional video into a bitstream, at least one picture of said omnidirectional video being represented as a surface, said surface being projected onto at least one 2D picture using a projection function, said apparatus comprising, for at least one current block of said at least one 2D picture,

   - means for adapting a size of said at least one current block as a function of a pixel density function determined according to said projection function; and
   - means for encoding said at least one current block into said bitstream using said adapted size.

3. Apparatus for coding according to claim 2 or method according to claim 1 wherein said act of adapting a size of said at least one current block comprises splitting (S2400a) said at least one current block according to a criterion function of said pixel density function, said act of splitting delivering at least one subblock associated to said at least one current block;
   and wherein said act of encoding comprises encoding the at least one subblock associated to said at least one current block.

4. Apparatus for coding according to any of claims 2 or 3 or method according to any of claims 1 or 3 wherein said act of adapting a size of said at least one current block comprises adapting a size of a transform (S2400b) to be applied to said current block or subblock;
   and wherein said act of encoding comprises applying said transform of adapted size (S2410a) to said current block or subblock.

5. A method for decoding a bitstream representative of an omnidirectional video, at least one picture of said omnidirectional video being represented as a surface, said surface being projected onto at least one 2D picture using a projection function, said method comprising, for at least one current block of said at least one 2D picture,

   - adapting (S2500) a size of said at least one current block as a function of a pixel density function determined according to said projection function; and
   - decoding (S2510) from said bitstream said at least one current block using said adapted size.

6. An apparatus for decoding (700) a bitstream representative of an omnidirectional video, at least one picture of said omnidirectional video being represented as a surface, said surface being projected onto at least one 2D picture using a projection function, said apparatus comprising, for at least one current block of said at least one 2D picture,

   - means for adapting a size of said at least one current block as a function of a pixel density function determined according to said projection function; and
   - means for decoding from said bitstream said at least one current block using said adapted size.

7. Apparatus for decoding according to claim 6 or method according to claim 5 wherein said act of adapting a size of said at least one current block comprises splitting (S2500a) said at least one current block according to a criterion function of said pixel density function, said act of splitting delivering at least one subblock associated to said at least one current block;

and wherein said act of decoding comprises decoding the at least one subblock associated to said at least one current block.

8. Apparatus for decoding according to any of claims 6 or 7 or method according to claims 5 or 7 wherein said act of adapting a size of said at least one current block comprises adapting a size of an inverse transform (S2500b) to be applied to said current block or subblock;
and wherein said act of decoding comprises applying said inverse transform of adapted size (S2510a) to said current block or subblock.

9. Apparatus according to any one of the claims 3 or 7 or method according to any of claims 3 or 7, wherein said criterion belongs to a group comprising at least:

- a ratio of an average value of a horizontal, respectively vertical, component of said pixel density function over an average value of the vertical, respectively horizontal, component of said pixel density function being compared to a threshold;
- a ratio of a maximum value of the horizontal, respectively vertical, component of said pixel density function over a maximum value of the vertical, respectively horizontal, component of said pixel density function being compared to a threshold; or
- a ratio of a maximum value of the horizontal, respectively vertical, component of said pixel density function over a minimum value of the vertical, respectively horizontal, component of said pixel density function being compared to a threshold.

10. Apparatus according to claims 2 or 6 or method according to any of claims 1 or 5, wherein said act of adapting a size of said at least one current block comprises delivering at least one current block of adapted size, and wherein said adapted size is derived from a nominal size divided by an average value, or a median value, of said pixel density function computed for at least one pixel of said at least one current block.

11. Apparatus according to claim 2 or 6 or method according to claim 1 or 5, wherein said act of adapting a size comprises:

- determining a width, respectively a height, of said at least one current block as a function of an average value, or a median value, of a horizontal, respectively vertical, component of said pixel density function computed for at least one pixel of said at least one current block.

12. A computer program product comprising software code instructions for performing a methods according to any one of claims 1, 3, 4, 5, 7, 8, 9 ,10, 11, when the computer program is executed by a processor.

13. A bitstream representative of a coded omnidirectional video, at least one picture of said omnidirectional video being represented as a surface, said surface being projected onto at least one 2D picture using a projection function, said bistream comprising:

- coded data representative of at least one current block of said 2D picture; and
- an information indicating that said at least one current block has been encoded using a size adapted as a function of a pixel density function determined according to said projection function.

14. An immersive rendering device comprising an apparatus for decoding a bitstream representative of an omnidirectional video according to claim 6.

15. A system for immersive rendering of an omnidirectional video encoded into a bistream, comprising at least:

- a network interface (600) for receiving said bistream from a data network,
- an apparatus (700) for decoding said bitstream according to claim 6,
- an immersive rendering device (900).

FIG. 1

FIG. 2

EP 3 301 920 A1

FIG. 3

FIG. 4

EP 3 301 920 A1

Internet

```
                          ┌──────────────┐ 70
                          │  ┌─────────┐ │
                          │  │   705   │ │
                          │ ┌┴─────────┴─┐│
                    701   │ │ smartphone ││
                          └─┴────┬──────┬─┘
                                 │      │
                                 ▼      ▼
                          ┌──────────┐ ┌─────────┐
                          │User inputs│ │ sensors │
                          └──────────┘ └─────────┘
                               │            │
                              30           20
```

FIG. 5

Internet

```
                          ┌──────┐
                          │  80  │
                          └──┬──┬─┘
                             │  │
                             ▼  ▼
                    ┌──────────┐ ┌─────────┐
                    │User inputs│ │ sensors │
                    └──────────┘ └─────────┘
                         │            │
                        30           20
```

FIG.6

FIG. 7

FIG. 8

6000

5000

Internet

GW

7000

Internet

Internet

game
console

game
console

7000

User inputs

sensors

2000

3000

FIG. 9

10

101

102

display

104

touchpad

Communication
I/f

processing

105

106

memory

camera

103

FIG. 10

FIG. 11

70

Communication I/f — 702

Smartphone housing — 705

optics — 704

FIG. 12

80

display — 801

touchpad — 802

processing — 804

camera — 803

memory — 805

Communication I/f — 806

FIG. 13A

FIG. 13B

FIG. 13C

FIG. 14B

FIG. 14D

FIG. 14A

FIG. 14C

FIG. 14E

FIG. 14F

Phi (°)

90

45

0

-45

-90

FIG. 15A

Horizontal pixel density

1,2

1

0,8

0,6

0,4

0,2

0

-100  -80  -60  -40  -20   0   20   40   60   80  100

Phi (°)

FIG. 15B

phi (°)

45

0

-45

-45              0              45  theta (°)

FIG. 16A

Horizontal, Vertical pixel density

1,2

1

0,8

0,6

0,4

0,2

0

-50  -40  -30  -20  -10   0   10   20   30   40   50

Theta, Phi (°)

FIG. 16B

EP 3 301 920 A1

FIG. 17

FIG. 18

FIG. 19

FIG. 20

FIG. 21

Horizontal
1D DCT

Vertical
1D DCT

$N_{v,max}$

$N_{h,max}$

FIG. 22

Horizontal
1D DCT

FIG. 23

```
┌─────────────────────┐
│  ADAPTING BLOCK     │──── S2400
│       SIZE          │
└─────────────────────┘
           │
           ▼
┌─────────────────────┐
│     ENCODING        │──── S2410
└─────────────────────┘
```

FIG. 24A

```
┌───────────────────────────┐
│  ADAPTING BLOCK           │──── S2400
│       SIZE                │
│  ┌─────────────────────┐  │
│  │     SPLITTING       │──┼── S2400a
│  └─────────────────────┘  │
│  ┌─────────────────────┐  │
│  │     ADAPTING        │  │
│  │    TRANSFORM        │──┼── S2400b
│  │       SIZE          │  │
│  └─────────────────────┘  │
└───────────────────────────┘
             │
             ▼
┌───────────────────────────┐
│      ENCODING             │──── S2410
│                           │
│  ┌─────────────────────┐  │
│  │     PARTIAL         │──┼── S2410a
│  │    TRANSFORM        │  │
│  └─────────────────────┘  │
└───────────────────────────┘
```

FIG. 24B

FIG. 25A

FIG. 25B

EP 3 301 920 A1

EP 3 301 920 A1

FIG. 26

FIG. 27

EP 3 301 920 A1

400

| MEM | COMIN |
|---|---|
| PG | COMOUT |
| PROC | |

FIG. 28

700

| MEM | COMIN |
|---|---|
| PG | COMOUT |
| PROC | |

FIG. 29

Europäisches
Patentamt

European
Patent Office

Office européen
des brevets

# EUROPEAN SEARCH REPORT

Application Number

EP 16 30 6264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/094884 A1 (TAKISHIMA YASUHIRO [JP] ET AL) 5 May 2005 (2005-05-05) * paragraphs [0028] - [0033], [0035] - [0038], [0043] * | 1-15 | INV. H04N19/119 H04N19/122 H04N19/16 H04N19/176 H04N19/597 |
| A | YU MATT ET AL: "A Framework to Evaluate Omnidirectional Video Coding Schemes", 2015 IEEE INTERNATIONAL SYMPOSIUM ON MIXED AND AUGMENTED REALITY, IEEE, 29 September 2015 (2015-09-29), pages 31-36, XP032809476, DOI: 10.1109/ISMAR.2015.12 [retrieved on 2015-11-11] * sections 1, 3 * | 1-15 | |
| A | Ingo Bauermann ET AL: "H.264 BASED CODING OF OMNIDIRECTIONAL VIDEO" In: "Computer Vision and Graphics", 1 January 2006 (2006-01-01), Kluwer Academic Publishers, Dordrecht, XP055320200, ISBN: 978-1-4020-4178-5 vol. 32, pages 209-215, DOI: 10.1007/1-4020-4179-9_30, * sections 1-3 * | 1-15 | |
| A | JP H10 271341 A (MITSUBISHI ELECTRIC CORP) 9 October 1998 (1998-10-09) * abstract * | 1-15 | |
| A | & JP 3 260094 B2 (MITSUBISHI ELECTRIC CORP) 25 February 2002 (2002-02-25) * abstract * | 1-15 | |

TECHNICAL FIELDS SEARCHED (IPC)

H04N

The present search report has been drawn up for all claims

| Place of search | Date of completion of the search | Examiner |
|---|---|---|
| Munich | 17 November 2016 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6264

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2016

| Patent document cited in search report | | Publication date | Patent family member(s) | | Publication date |
|---|---|---|---|---|---|
| US 2005094884 | A1 | 05-05-2005 | NONE | | |
| JP H10271341 | A | 09-10-1998 | JP | 3260094 B2 | 25-02-2002 |
| | | | JP | H10271341 A | 09-10-1998 |

For more details about this annex : see Official Journal of the European Patent Office, No. 12/82